(19) Europäisches Patentamt / European Patent Office / Office européen des brevets

(11) **EP 4 527 141 B1**

(12) **EUROPEAN PATENT SPECIFICATION**

(45) Date of publication and mention
of the grant of the patent:
**20.05.2026 Bulletin 2026/21**

(21) Application number: **22734874.5**

(22) Date of filing: **07.06.2022**

(51) International Patent Classification (IPC):
*H04W 74/08* (2024.01)   *H04J 99/00* (2009.01)
*H04L 1/00* (2006.01)   *H04L 25/02* (2006.01)

(52) Cooperative Patent Classification (CPC):
**H04L 1/0041; H04L 25/0202; H04L 25/03006;
H04W 74/0833**

(86) International application number:
**PCT/EP2022/065320**

(87) International publication number:
**WO 2023/237179 (14.12.2023 Gazette 2023/50)**

(54) **RANDOM-ACCESS COMMUNICATION WITH TENSOR BASED MODULATION OF FIRST MESSAGE PART FOR NON-COHERENT DEMODULATION AND COHERENT DEMODULATION OF SECOND MESSAGE PART**

DIREKTZUGRIFFSKOMMUNIKATION MIT TENSORBASIERTER MODULATION EINES ERSTEN NACHRICHTENTEILS ZUR NICHTKOHÄRENTEN DEMODULATION UND KOHÄRENTEN DEMODULATION EINES ZWEITEN NACHRICHTENTEILS

COMMUNICATION À ACCÈS ALÉATOIRE AVEC MODULATION BASÉE SUR UN TENSEUR D'UNE PREMIÈRE PARTIE DE MESSAGE POUR UNE DÉMODULATION NON COHÉRENTE ET UNE DÉMODULATION COHÉRENTE D'UNE SECONDE PARTIE DE MESSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.03.2025 Bulletin 2025/13**

(73) Proprietor: **Huawei Technologies Co., Ltd.
Shenzhen, Guangdong 518129 (CN)**

(72) Inventors:
• **GUILLAUD, Maxime**
  **80992 Munich (DE)**
• **DECURNINGE, Alexis**
  **80992 Munich (DE)**

(74) Representative: **Körber, Martin Hans
Mitscherlich PartmbB
Karlstraße 7
80333 München (DE)**

(56) References cited:
**WO-A1-2021/175430**

• **DECURNINGE ALEXIS ET AL: "Tensor-Based Modulation for Unsourced Massive Random Access", IEEE WIRELESS COMMUNICATIONS LETTERS, IEEE, PISCATAWAY, NJ, USA, vol. 10, no. 3, 11 November 2020 (2020-11-11), pages 552 - 556, XP011841083, ISSN: 2162-2337, [retrieved on 20210308], DOI: 10.1109/LWC.2020.3037523**
• **DECURNINGE ALEXIS ET AL: "A Tensor-Based Approach to Massive Random Access", 2020 54TH ASILOMAR CONFERENCE ON SIGNALS, SYSTEMS, AND COMPUTERS, IEEE, 1 November 2020 (2020-11-01), pages 1147 - 1151, XP033921880, DOI: 10.1109/ IEEECONF51394.2020.9443284**

**Description**

TECHNICAL FIELD

The present disclosure relates generally to the field of wireless communication; and more specifically, to a transmitting device, a receiving device, a communication apparatus comprising the transmitting device and the receiving device, and methods for random-access communication.

BACKGROUND

With the rapid increase in the number of communication devices in a network, concerns about communication reliability have become prominent. Traditionally, multiple access methods with fixed resource assignments are used by conventional communication devices for communication of data in a network. In the fixed access methods, a given communication device is assigned dedicated time-frequency resources in order to send data via a communication channel. These conventional multiple access methods are less efficient in terms of channel utilization because sometimes the given communication device may not have any data to transmit in the dedicated time-frequency resources, resulting in a loss in terms of spectral efficiency.

In certain scenarios, instead of the conventional fixed access methods, conventional random-access methods are used for a comparatively better utilization of the communication channel. In the conventional random-access methods, a conventional communication device (e.g., a transmitter) is allowed to send data on the communication channel whenever it has some data to transmit. There is no need of a preassigned time slot or a fixed frequency for data transmission. The conventional random-access methods are typically classified into coherent and non-coherent methods. In coherent methods, the channel state is known to communication devices (i.e., both the transmitter and the receiver). In non-coherent methods, the channel state is supposed to be unknown to both the conventional transmitter and the conventional receiver. In an implementation scenario of the random-access methods, the conventional receiver receives massively transmitted messages from a number of the conventional transmitters which are active at that point of time. Moreover, in the so-called unsourced setting, the conventional receiver does not know the identity of the active conventional transmitters in advance since, the conventional transmitters are assumed to be randomly activated in said implementation scenario of the random-access methods (e.g., a massive random-access scenario). Currently, certain methods have been proposed to perform in such implementation scenarios of the random-access methods, such as pilot-based methods and non-coherent modulation. In the pilot-based methods, the available channel accesses are divided in two parts, a first part is dedicated to a non-orthogonal pilot sequence (e.g., columns of a compressed sensing matrix) used at a conventional receiver in order to perform activity detection and channel estimation. A second part is dedicated to a typical coherent modulation decoded at the conventional receiver by using the channels estimated depending on the first part. Although, in the non-coherent modulation, the whole set of channel uses is dedicated to a constellation and directly decoded at the conventional receiver without channel knowledge using the specific constellation structure. An example of the non-coherent modulation is tensor-based modulation in which the constellation is generated using a specific structure issued from rank-1 tensors. However, the aforementioned methods manifest sub-optimal performance in terms of the amount of data that can be encoded by each transmitter in the modulation (also known as spectral efficiency), and the number of the conventional transmitters (or users) that can be supported, especially for systems using the pilot-based methods. Thus, there exists a technical problem of an inadequate communication reliability and limited number of transmitters (or users) that can supported simultaneously, in the conventional random-access methods.

Therefore, in light of the foregoing discussion, there exists a need to overcome the aforementioned drawbacks associated with the conventional random-access methods.

WO 2021/175430 A1 discloses a transmitting device, a receiving device, and methods for random-access communication for increasing the data rate of the transmission by allowing that some payload bits can be transmitted using coherent detection at the receiver. WO2021175430A1 discloses that tensor-based data transmission is implemented by constructing a symbol vector through Kronecker products of multiple vectors. The use of the Kronecker structure for signal construction (i.e. waveform design) is advantageous because it provides a reliable user separation property of the received signal at the receiver side. The implementation involves encoding an input message into sequences of bits, splitting these into d blocks, determining d vectors from these blocks, and constructing the symbol vector by computing Kronecker products to generate a rank-1 tensor structure of order d. The document further explains that the symbol vector "$sk = x_{k,1} \otimes \blacksquare \; \blacksquare \; \blacksquare \otimes x_{k,d}$" where the Kronecker product enables a definite multi-dimensional data structure that improves waveform design and reduces decoding complexity.

SUMMARY

The present disclosure provides a transmitting device, a receiving device, a communication apparatus comprising the transmitting device and the receiving device, and methods for random-access communication. The present disclosure provides a solution to the existing problem of the limited amount of data that can be encoded by each transmitter in the modulation and limited number of transmitters (or users) that can supported simultaneously, in the conventional random-access methods. An aim of the present disclosure is to provide a solution that overcomes at least partially the problems encountered in prior art, and provide an improved transmitting device, an improved receiving device, an improved communication apparatus comprising the improved transmitting device and the improved receiving device, and improved methods for random-access communication.

The object of the present disclosure is achieved by the solutions provided in the appended claims. In the following, parts of the description and drawings referring to embodiments which are not covered by the claims are not embodiments of the invention, but are examples useful for understanding the invention.

In one aspect, the present disclosure provides a transmitting device for random access communication, comprising an encoding circuit configured to encode an input message into a first sequence of bits and a second sequence of bits, split the first sequence of bits into d blocks of bits, where d > 1, and determine d vectors, based on the d blocks of bits. The transmitting device further comprises a first mapping circuit configured to construct a first symbol vector by computing a Kronecker product of the d vectors to generate a rank-1 tensor structure of order d. The transmitting device further comprises a second mapping circuit configured to map the second sequence of bits to a vector of baseband symbols, and apply an allocation matrix to the vector of baseband symbols to generate a second symbol vector, where the allocation matrix is a precoding matrix based on the first sequence of bits. The transmitting device further comprises a concatenation circuit configured to concatenate the first symbol vector and the second symbol vector into a baseband symbol vector, a modulation circuit configured to modulate the baseband symbol vector to generate a modulated symbol vector comprising modulated symbols, and at least one antenna configured to transmit each modulated symbol of the modulated symbol vector in a radio frequency signal to a receiving device.

The disclosed transmitting device combines the tensor-based modulation (TBM) with the coherent modulation and hence, manifests an improved spectral efficiency over a conventional tensor-based modulation in case of large symbol size. Alternatively stated, the transmitting device transmits a part of information payload by use of tensor-based modulation and transmits rest of the information payload by use of coherent modulation. The disclosed transmitting device provides an improved spectral efficiency. Additionally, the transmitting device may be used in a block fading channel as well as in a non-block fading channel.

In an implementation form, the encoding circuit is configured to split the input message into a first message and a second message, encode the first message into the first sequence of bits, and encode the second message into the second sequence of bits.

The first sequence of bits and the second sequence of bits are used to generate the first symbol vector and the second symbol vector, respectively, by use of different vector symbol mappers.

In a further implementation form, the encoding circuit is configured to encode the input message into a main sequence of bits, and split the main sequence of bits into the first sequence of bits and the second sequence of bits.

By virtue of splitting the main sequence of bits into the first sequence of bits and the second sequence of bits, different vector symbol mappers can be used in order to generate the first symbol vector and the second symbol vector, respectively.

In a further implementation form, the encoding circuit is configured to use a binary code for encoding messages.

By virtue of encoding the input message according to the binary code, redundancy is added to the input message which makes the input message robust to the noise and different kind of interferences.

In a further implementation form, the encoding circuit is configured to select the precoding matrix from a fixed dictionary comprising matrices, where each of the matrices of the fixed dictionary is equal to one of a same unitary matrix, a same unitary matrix multiplied by a same permutation matrix, a same unitary matrix multiplied by a truncated permutation matrix from a set of non-disjoint truncated permutation matrices, a matrix from a set of matrices corresponding to subspaces of a Grassmannian space, or a matrix from a set of truncated unitary matrices. In a further implementation form, this selection of the precoding matrix by the encoding circuit is based on the first sequence of bits.

The selection of the precoding matrix from the fixed dictionary leads to a low complexity decoding process at the receiving device.

In a further implementation form, the modulation circuit is further configured to map the baseband symbol vector in a time-frequency grid associated with a plurality of time-frequency resources according to a pre-defined allocation matrix, associated with a multicarrier modulation, e.g. an Orthogonal Frequency-Division Multiplexing (OFDM) modulation.

The time-frequency mapping of each element of the first symbol vector enables the receiving device to more accurately estimate and compensate the timing and carrier frequency offsets and hence, the improved communication reliability is obtained in the communication system comprising the transmitting device and the receiving device in a non-block fading channel.

In a further implementation form, the first mapping circuit is further configured to multiply each of the d vectors by a unitary matrix, prior to computing the Kronecker product.

The use of the unitary matrix provides an additional degree of freedom in the design of sub-constellations. Moreover, an adequate choice of the unitary matrix enables the receiving device to accurately estimate and compensate the timing and carrier frequency offsets which further leads to the improved communication reliability.

In a further implementation form, the second mapping circuit is configured to map the second sequence of bits to the vector of baseband symbols by using a quadrature amplitude modulation or a phase shift keying modulation, or any state-of-the-art scalar modulation.

In a further implementation form, the concatenation circuit is further configured to multiply the result of the concatenation of the first symbol vector and the second symbol vector by a permutation matrix to form the baseband symbol vector.

The multiplication of the result of the concatenation of the first symbol vector and the second symbol vector by the permutation matrix to form the baseband symbol vector leads to an accurate estimation as well as compensation of the timing and carrier frequency offsets at the receiving device.

In another aspect, the present disclosure provides a receiving device for random access communication, as defined in claim 6.

The receiving device provides an improved communication reliability and supports a large number of users simultaneously. Moreover, the receiving device detects a set of active transmitting devices among the plurality of transmitting devices as well as estimates the respective channels of the set of active transmitting devices among the plurality of transmitting devices by virtue of the separation circuit, and the equalizing circuit. Moreover, the equalizing circuit is configured to use the plurality of estimated precoding matrices and the plurality of estimated channel parameters to de-map the coherent modulation used at the transmitting device. Additionally, the receiving device may be used in a block fading channel as well as in a non-block fading channel.

In an implementation form, the decoding circuit comprises a plurality of first decoders each configured to decode one of the first estimated symbol vectors generated by the separation circuit to generate a plurality of first decoded messages, each first decoded message comprising a first sequence of bits corresponding to a first part of data associated with a corresponding transmitting device amongst the plurality of transmitting devices and a plurality of second decoders each configured to decode one of the second estimated symbol vectors generated by the equalization circuit to generate a plurality of second decoded messages, each of the second decoded messages comprising a second sequence of bits corresponding to a second part of data associated with a corresponding transmitting device amongst the plurality of transmitting devices.

In a further implementation form, the decoding circuit comprises a plurality of decoders each configured to receive one of the first estimated symbol vectors and one of the second estimated symbol vectors, concatenate the received first and second estimated symbol vectors into a concatenated estimated symbol vector, and decode the concatenated estimated symbol vector to generate a plurality of decoded messages.

In a further implementation form, the splitting circuit is further configured to apply a predefined permutation matrix to the demodulated signals to generate the first baseband signals and the second baseband signal.

In a further implementation form, the separation circuit is further configured to estimate a time offset and a frequency offset in each of the first estimated symbol vectors to generate a plurality of time offsets and a plurality of frequency offsets, and apply a time offset compensation, based on the corresponding time offset, and a frequency offset compensation, based on the corresponding frequency offset, to the corresponding first estimated symbol vector.

The estimation of the time offsets and the frequency offsets leads to more accurate compensation of the time offset and the frequency offset in each of the first estimated symbol vectors.

Besides, the equalizing circuit is further configured to generate each of the second estimated symbol vectors based on the plurality of time offsets, the plurality of frequency offsets, the plurality of estimated precoding matrices and the plurality of estimated channel parameters.

In a yet another aspect, the present disclosure provides a communication apparatus, comprising the transmitting device and the receiving device.

The communication apparatus achieves all the advantages and technical effects of the transmitting device as well as the receiving device of the present disclosure.

In a yet another aspect, the present disclosure provides a method for random-access communication. The method comprises acquiring, by an encoding circuit of a transmitting device, an input message and encoding, by the encoding circuit, the input message into a first sequence of bits and a second sequence of bits. The method further comprises splitting, by the encoding circuit, the first sequence of bits in d blocks of bits, where $d > 1$ and determining, by the encoding circuit, d vectors based on the d blocks of bits. The method further comprises constructing a first symbol vector, by a first mapping circuit of the transmitting device, by computing the Kronecker product of the d vectors to generate a rank-1 tensor structure of order d and mapping, by a second mapping circuit of the transmitting device, the second sequence of bits to a vector of baseband symbols. The method further comprises applying, by the second mapping circuit, an allocation matrix to the vector of baseband symbols to generate a second symbol vector, where the allocation matrix is a precoding matrix based on the first sequence of bits and concatenating, by a concatenation circuit of the transmitting device, the first symbol vector and the second symbol vector into a baseband symbol vector. The method further comprises modulating, by a modulation circuit of the transmitting device, the baseband symbol vector to generate a modulated symbol vector comprising modulated symbols, and transmitting, by at least one antenna of the transmitting device, each modulated symbol of the modulated symbol vector in a radio frequency signal to a receiving device.

The method achieves all the advantages and technical effects of the transmitting device of the present disclosure.

In a yet another aspect, the present disclosure provides a method for random access communication as defined in claim 13.

The method achieves all the advantages and technical effects of the receiving device of the present disclosure.

In a yet another aspect, the present disclosure provides a computer program product comprising program instructions for performing the methods for random access communication, when executed by one or more processors in a computer system.

The one or more processors of the computer system achieve all the advantages and technical effects of the methods after execution of the methods for random access communication.

It is to be appreciated that all the aforementioned implementation forms can be combined.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1 is a network environment diagram of a system with a plurality of transmitting devices and a receiving device, in accordance with an embodiment of the present disclosure;

FIG. 2A is a block diagram that illustrates various exemplary components of a transmitting device, in accordance with an embodiment of the present disclosure;

FIG. 2B is a block diagram that illustrates various exemplary components of a transmitting device, in accordance with another embodiment of the present disclosure;

FIG. 2C is a block diagram that illustrates various exemplary components of a transmitting device, in accordance with yet another embodiment of the present disclosure;

FIG. 3 is an illustration of time-frequency mapping of a modulated symbol vector in a time-frequency grid, in accordance with an embodiment of the present disclosure;

FIG. 4 is a flowchart of a method for a random-access communication, in accordance with an embodiment of the present disclosure;

FIG. 5 is a block diagram that illustrates various exemplary components of a receiving device, in accordance with an embodiment of the present disclosure;

FIG. 6 is an illustration of a receiving device, in accordance with an embodiment of the present disclosure;

FIG. 7 is an illustration of a separation circuit of a receiving device, in accordance with an embodiment of the present disclosure;

FIG. 8 is an illustration of an equalizing circuit of a receiving device, in accordance with an embodi-

FIG. 9     is another illustration of a receiving device, in accordance with another embodiment of the present disclosure;

FIGs. 10A and 10B     collectively is a flowchart of a method for random access communication, in accordance with an embodiment of the present disclosure;

FIG. 11     is a block diagram that illustrates various exemplary components of a communication apparatus, in accordance with an embodiment of the present disclosure; and

FIG. 12     is a graphical representation that illustrates variation of block error rate (BLER) with respect to signal-to-noise ratio (SNR) for a mixed tensor-based modulation and coherent modulation and a typical tensor-based modulation in case of large payloads, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

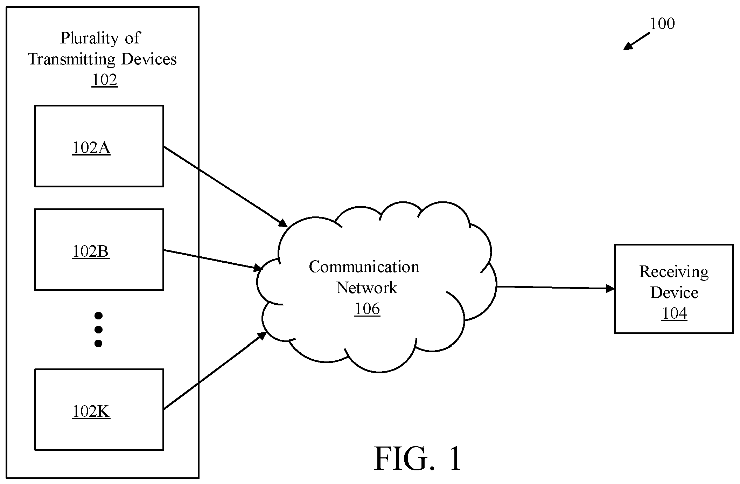

FIG. 1 is a network environment diagram of a system with a plurality of transmitting devices and a receiving device, in accordance with an embodiment of the present disclosure. With reference to FIG. 1, there is shown a network environment of a system **100** that includes a plurality of transmitting devices **102** and a receiving device **104.** There is further shown a communication network **106.** The plurality of transmitting devices **102** includes K transmitting devices, such as a first transmitting device **102A,** a second transmitting device **102B,** and up to a K-th transmitting device **102K.**

Each of the plurality of transmitting devices **102** may include suitable logic, circuitry, interfaces and/or code that is configured to communicate with the receiving device **104** via the communication network **106** (e.g., a propagation channel). Examples of each of the plurality of transmitting devices **102** may include, but are not limited to, an Internet-of-Things (IoT) device, a smart phone, a machine type communication (MTC) device, a computing device, an evolved universal mobile telecommunications system (UMTS) terrestrial radio access (E-UTRAN) NR-dual connectivity (EN-DC) device, a server, an IoT controller, a drone, a customized hardware for wireless telecommunication, a transmitter, or any other portable or non-portable electronic device. In the system **100,** each of the plurality of transmitting devices **102** has a single antenna for communication with the receiving device **104.** However, in another implementation of the system **100,** each of the plurality of transmitting devices **102** may have more than one antenna for communication with the receiving device **104.**

The receiving device **104** may include suitable logic, circuitry, interfaces and/or code that is configured to receive one or more radio frequency signals concurrently from the plurality of transmitting devices **102,** via the communication network **106.** Examples of the receiving device **104** may include, but are not limited to, an Internet-of-Things (IoT) controller, a base station, a server, a smart phone, a customized hardware for wireless telecommunication, a receiver, or any other portable or non-portable electronic device. In the system **100,** the receiving device **104** has more than one antenna for communication with the plurality of transmitting devices **102.**

The communication network **106** includes a medium (e.g., a communication channel) through which the plurality of transmitting devices **102,** potentially communicates with the receiving device **104.** Examples of the communication network **106** may include, but are not limited to, a cellular network (e.g., a 2G, a 3G, long-term evolution (LTE) 4G, a 5G, or 5G NR network, such as sub 6 GHz, cmWave, or mmWave communication network), a wireless sensor network (WSN), a cloud network, a Local Area Network (LAN), a vehicle-to-network (V2N) network, a Metropolitan Area Network (MAN), and/or the Internet. Each of the plurality of transmitting devices **102** in the network environment is configured to connect to the receiving device **104,** in accordance with various wireless communication protocols. Examples of such wireless communication protocols, communication standards, and technologies may include, but are not limited to, IEEE 802.11, 802.11p, 802.15, 802.16, 1609, Worldwide Interoperability for Microwave Access (Wi-MAX), Transmission Control Protocol and Internet Protocol (TCP/IP), User Datagram Protocol (UDP), Hypertext Transfer Protocol (HTTP), Long-term Evolution (LTE), File Transfer Protocol (FTP), Enhanced Data GSM Environment (EDGE), Voice over Internet Protocol (VoIP), a protocol for email, instant messaging, and/or Short Message Service (SMS), and/or other cellular or IoT communication protocols.

Additionally, a random number of the plurality of transmitting devices **102** may be active at a time and may be configured to transmit a plurality of radio frequency signals concurrently to the receiving device **104** via the communication network **106**. Therefore, the system **100** may also be referred to as an exemplary implementation of a massive random-access communication in which the plurality of transmitting devices **102** transmits the plurality of radio frequency signals concurrently to the receiving device **104**. Moreover, each of the plurality of transmitting devices **102** transmits the plurality of radio frequency signals concurrently to the receiving device **104** without any prior resource request (or grant).

Moreover, in an implementation of the system **100**, the communication network **106** may be configured to behave like a block fading channel between the plurality of transmitting devices **102** and the receiving device **104**. Alternatively stated, the plurality of transmitting devices **102** and the receiving device **104** are considered to be perfectly synchronized with each other and therefore, no timing and carrier frequency offsets are present in the system **100**. In another implementation of the system **100**, where there is no block fading channel between the plurality of transmitting devices **102** and the receiving device **104** and therefore, timing and carrier frequency offsets are present at the plurality of transmitting devices **102** and required to be compensated at the receiving device **104** in order to reduce probability of decoding error and obtain an adequate communication reliability in the system **100**.

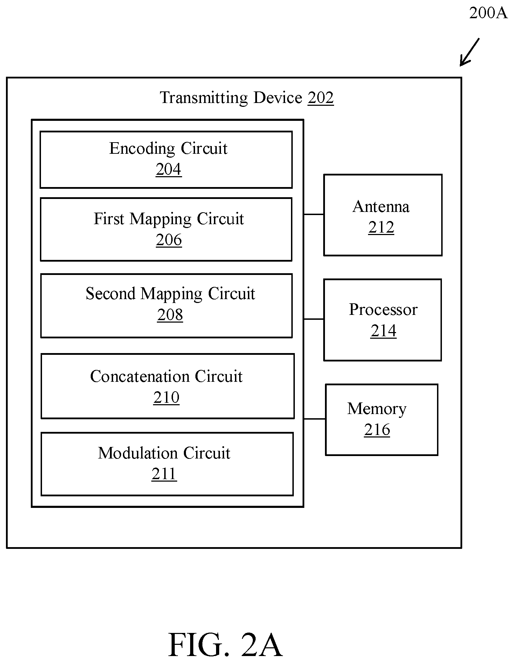

FIG. 2A is a block diagram that illustrates various exemplary components of a transmitting device, in accordance with an embodiment of the present disclosure. FIG. 2A is described in conjunction with elements from FIG. 1. With reference to FIG. 2A, there is shown a block diagram **200A** of a transmitting device **202** that includes an encoding circuit **204**, a first mapping circuit **206**, a second mapping circuit **208**, a concatenation circuit **210**, a modulation circuit **211**, an antenna **212**, a processor **214** and a memory **216**. In this implementation, the processor 214 and the memory 216 are separated. In another implementation, the memory 216 can be part of the processor 214, such as a level 1 cache memory.

Besides, in an implementation, the encoding circuit **204**, the first mapping circuit **206**, the second mapping circuit **208**, the concatenation circuit **210**, and the modulation circuit **211** may be a part of the processor **214**. In another implementation, each of the encoding circuit **204**, the first mapping circuit **206**, the second mapping circuit **208**, the concatenation circuit **210**, and the modulation circuit **211** are separate circuits or modules (and may not be a part of the processor **214**). The encoding circuit **204**, the first mapping circuit **206**, the second mapping circuit **208**, the concatenation circuit **210**, and the modulation circuit **211** are communicatively coupled to the antenna **212**, the processor **214** and the memory **216**. In this embodiment, the transmitting device **202** includes a single antenna, such as the antenna **212**. However, in other embodiments, the transmitting device **202** may include multiple antennas.

The transmitting device **202** corresponds to one of the plurality of transmitting devices **102** (of FIG. 1), such as the K-th transmitting device **102K**. The transmitting device **202** may be configured to communicate with the receiving device 104 (of FIG. 1).

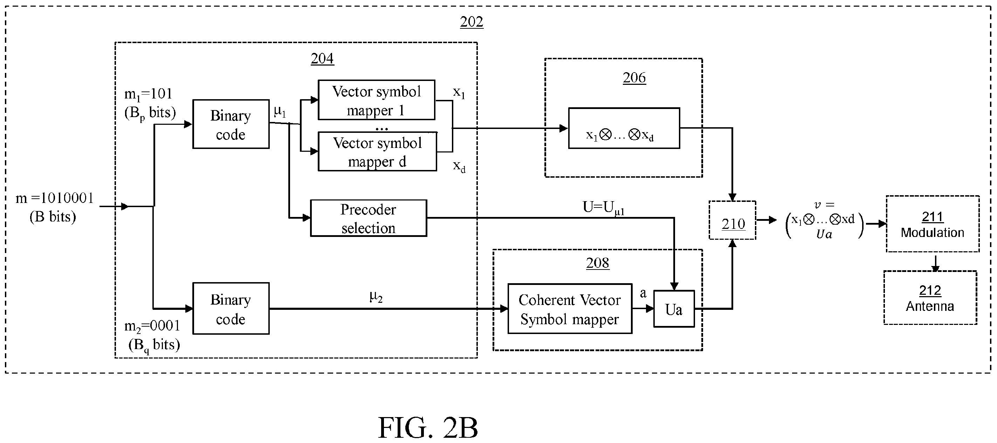

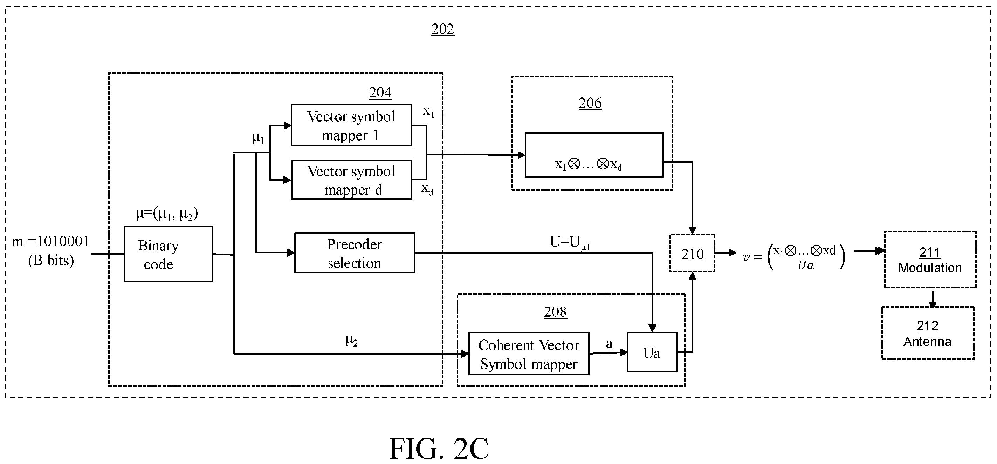

The encoding circuit **204** may include suitable logic, circuitry, and/or interfaces that is configured to acquire an input message and encode the input message into a first sequence of bits and a second sequence of bits. In an implementation, the encoding circuit **204** may be a binary encoder. The encoding circuit **204** is described in detail, for example, in FIGs. 2B and 2C.

The first mapping circuit **206** may include suitable logic, circuitry, and/or interfaces that is configured to construct a first symbol vector by computing a Kronecker product of d vectors to generate a rank-1 tensor structure of order d.

The second mapping circuit **208** may include suitable logic, circuitry, and/or interfaces that is configured to map the second sequence of bits to a vector of baseband symbols.

The concatenation circuit **210** may include suitable logic, circuitry, and/or interfaces that is configured to concatenate the first symbol vector and a second symbol vector into a baseband symbol vector.

The modulation circuit **211** may include suitable logic, circuitry, and/or interfaces that is configured to generate a modulated symbol vector comprising modulated symbols.

The antenna **212** may include suitable logic, circuitry, and/or interfaces that is configured to transmit each modulated symbol of the modulated symbol vector in a radio frequency signal to the receiving device **104** (of FIG. 1). Examples of the antenna **212** may include, but are not limited to, a radio frequency transceiver, a network interface, a telematics unit, or any antenna suitable for use in an IoT device, an IoT controller, a user equipment, a repeater, a base station or other portable or non-portable communication devices. The antenna **212** may wirelessly communicate by use of various wireless communication protocols.

The processor **214** may include suitable logic, circuitry, and/or interfaces that is configured to execute instructions stored in the memory **216**. Examples of the processor **214** may include, but are not limited to an integrated circuit, a co-processor, a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. Moreover, the processor **214** may refer to one or more individual processors, processing devices, a processing unit that is part of a machine.

The memory **216** may include suitable logic, circuitry, and/or interfaces that is configured to store machine code and/or instructions executable by the processor **214**. The memory **216** may temporally store one or more modulated symbol vectors, which are then transmitted by the antenna **212** in form of one or more radio frequency signals to the receiving device **104.** Examples of implementation of the memory **216** may include, but are not limited to, an Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory. The memory **216** may store an operating system and/or a computer program product to operate the transmitting device **202.** A computer readable storage medium for providing a non-transient memory may include, but is not limited to, an electronic storage device, a magnetic storage device, an optical storage device, an electromagnetic storage device, a semiconductor storage device, or any suitable combination of the foregoing.

FIG. 2B is a block diagram that illustrates various exemplary components of a transmitting device, in accordance with another embodiment of the present disclosure. FIG. 2B is described in conjunction with elements from FIGs. 1 and 2A. With reference to FIG. 2B, there is shown a block diagram of the transmitting device **202.**

In operation, the transmitting device **202** is configured for random-access communication with the receiving device **104** (of FIG. 1). The transmitting device **202** comprises the encoding circuit **204** that is configured to encode an input message into a first sequence of bits and a second sequence of bits. In an implementation, the encoding circuit **204** of the transmitting device **202** is configured to acquire the input message, for example, a binary message m of B bits. In response to acquiring the input message (e.g., the binary message, m = 1010001), the transmitting device **202** outputs a modulated symbol vector, v of dimension T, where T is the number of channel uses. Furthermore, the encoding circuit **204** is configured to encode the input message (i.e., the binary message, m = 1010001) into the first sequence of bits and the second sequence of bits. In an implementation, the encoding circuit **204** may be configured to split the input message (i.e., the binary message, m = 1010001) into a first message and a second message and thereafter, encode the first message into the first sequence of bits and encode the second message into the second sequence of bits, as shown in FIG. 2B. In another implementation, the encoding circuit **204** may be configured to encode the input message (i.e., the binary message, m = 1010001) into a main sequence of bits, and split the main sequence of bits into the first sequence of bits and the second sequence of bits, described in detail, for example, in FIG. 2C.

In accordance with an embodiment, the encoding circuit **204** is configured to split the input message into a first message and a second message, encode the first message into the first sequence of bits, and encode the second message into the second sequence of bits. As shown in FIG. 2B, the encoding circuit **204** is configured to split the input message (i.e., the binary message, m = 1010001) into the first message (may also be represented as $m_1$, where $m_1$= 101) and the second message (may also be represented as $m_2$, where $m_2$= 0001). The first message (i.e., $m_1$= 101) and the second message (i.e., $m_2$= 0001) has $B_p$ and $B_q$ bits, respectively, in such a way that the $B_p$+ $B_q$= B bits of the input message (i.e., the binary message, m = 1010001). Thereafter, the encoding circuit **204** is configured to encode the first message (i.e., $m_1$= 101) into the first sequence of bits (may also be represented as $\mu_1$) and the second message (i.e., $m_2$= 0001) into the second sequence of bits (may also be represented as $\mu_2$). The first sequence of bits (i.e., $\mu_1$) and the second sequence of bits (i.e., $\mu_2$) has the number of encoded bits as $B_p'$ and $B_q'$, respectively.

In accordance with an embodiment, the encoding circuit **204** is configured to use a binary code for encoding messages. In an implementation, the encoding circuit **204** may be configured to encode the first message (i.e., $m_1$= 101) and the second message (i.e., $m_2$= 0001) into the first sequence of bits (i.e., $\mu_1$) and the second sequence of bits (i.e., $\mu_2$), respectively, by use of binary codes, for example, source codes, channel codes, and the like. The channel codes may include low-density parity check (LDPC) codes, Turbo codes, Viterbi codes, and the like.

The encoding circuit **204** of the transmitting device **202** is further configured to split the first sequence of bits into d blocks of bits, where d > 1, and determine d vectors, based on the d blocks of bits. Furthermore, the encoding circuit **204** is configured to split the first sequence of bits (i.e., $\mu_1$) into the d blocks, where d is an arbitrary number and greater than 1. For example, in a case, the first sequence of bits (i.e., $\mu_1$) may have eleven bits as 00110101011 and the first sequence of bits (i.e., $\mu_1$) is split into d blocks in such a way that a first block has three bits (e.g., $\mu_1' = 001$), a second block has three bits (e.g., $\mu_2' = 101$), a third block has three bits (e.g., $\mu_3' = 010$), and a fourth block has last two bits (e.g., $\mu_4' = 11$). This way, the first sequence of bits (i.e., $\mu_1$) is split into four blocks. Thereafter, the encoding circuit **204** is configured to determine the d vectors on the basis of the d block of bits. In the aforementioned case, d is equal to four and the encoding circuit **204** is configured to determine the four vectors. The first block (i.e., $\mu_1' = 001$) is used to generate a first vector (may also be represented as $x_1$). Similarly, the second block (i.e., $\mu_2' = 101$), the third block (i.e., $\mu_3' = 010$) and the fourth block (i.e., $\mu_4' = 11$) is used to generate the second vector (may also be represented as $x_2$), the third vector (may also be represented as $x_3$), and the fourth vector (may also be represented as $x_4$), respectively. Similarly, a d-th block (e.g., $\mu_d'$) is used to generate a d-th vector (may also be represented as $x_d$). Each of the generated d vectors (i.e., $x_1, x_2, ..., x_d$) is a $p_r$-dimensional vector and the generated d vectors (i.e., $x_1, x_2, ..., x_d$) corresponds to a number of sub-constellations (i.e., $C_1, C_2, ... , C_d$). The generation of the d vectors on the basis of the d blocks of bits may also be referred to as vector symbol mapping and hence, the encoding circuit **204** may also be referred to as a vector symbol mapper circuit.

The first mapping circuit **206** is configured to construct a first symbol vector by computing a Kronecker product of the d vectors to generate a rank-1 tensor structure of order d. The first mapping circuit **206** is configured to construct the first symbol vector by computing the Kronecker product of the d vectors (i.e., $x_1$, $x_2$, ... , $x_d$) to generate the rank-1 tensor structure of order d. The Kronecker product is a form of matrix multiplication and is represented by a mathematical notation $\otimes$. The Kronecker product is also known as a tensor product (or a direct product). The use of the Kronecker product is beneficial as the dimensions of a plurality of matrices being multiplied together on the basis of the Kronecker product do not need to have any relation with each other. The Kronecker product of the d vectors (i.e., $x_1$, $x_2$, ... , $x_d$) is represented as $x_1 \otimes ... \otimes x_d$. The constructed first symbol vector has a multi-dimensional data structure. Moreover, the constructed first symbol vector carries the same information as the input message (i.e., the binary message, m) acquired by the encoding circuit **204.** The constructed first symbol vector may also be referred to as the rank-1 tensor structure of order d which means that the constructed first symbol vector may be construed as a d-dimensional array of real and complex numbers. The $d$-dimensional array of real or complex numbers is of respective dimensions $p_1 ...p_d$ (which can be denoted as "a tensor of order "$d$" and size "$p_1 \times ... \times p_d$"). The $p = \prod_{i=1}^{d} p_i$ numbers contained in the tensor structure can also be stored sequentially (in a predefined order) in a vector of size $p = \prod_{i=1}^{d} p_i$. Any tensor structure that can be potentially denoted as ($x_1 \otimes ... \otimes x_d$), where "$x_1 ... x_d$" refers to vectors with respective dimensions $p_1 ...p_d$ is usually called the rank-1 tensor structure. In a case where a tensor structure can be denoted as a sum of at least $n$ vectors, it is potentially deemed as a rank-n tensor. The use of the Kronecker product is advantageous as it results in a definite and fixed tensor structure of the first symbol vector (i.e., a definite multi-dimensional data structure), which simplifies a waveform design for random-access communication.

The second mapping circuit **208** is configured to map the second sequence of bits to a vector of baseband symbols, and apply an allocation matrix to the vector of baseband symbols to generate a second symbol vector, where the allocation matrix is a precoding matrix based on the first sequence of bits. The second mapping circuit **208** is configured to map the second sequence of bits (i.e., $\mu_2$) to the vector of baseband symbols (may also be represented as $a \in \mathbb{C}^q$) of dimensions q using a coherent modulation. Therefore, the second mapping circuit **208** may also be referred to as coherent vector symbol mapper. Furthermore, the second mapping circuit **208** is configured to apply the allocation matrix (may also be represented as $U$) to the vector of baseband symbols (i.e., $a$) to generate the second symbol vector (may also be referred to as $Ua$). The allocation matrix (i.e., $U$) is also referred to as the precoding matrix that is determined on the basis of the first sequence of bits (i.e., $\mu_1$) using a precoder selection. The first sequence of bits (i.e., $\mu_1$) is used to determine a ($T - p$) $\times q$ dimensional matrix as $U = U_{\mu_1}$ corresponding to the $\mu_1$-th matrix in a fixed dictionary $\left\{U_1, ..., U_{2^{B_p'}}\right\}$, where the first sequence of bits (i.e., $\mu_1$) and its integer representatives are confounded in between 1 and $2^{B_p'}$.

In accordance with an embodiment, the second mapping circuit **208** is configured to map the second sequence of bits to the vector of baseband symbols by using a quadrature amplitude modulation or a phase shift keying modulation. In an implementation, the second mapping circuit **208** may be configured to map the second sequence of bits (i.e., $\mu_2$) to the vector of baseband symbols (i.e., $a$) by using the quadrature amplitude modulation (QAM). Alternatively stated, each scalar element of the vector of modulated symbols (i.e., $a$) is generated using the QAM symbol. In another implementation, the second mapping circuit **208** may be configured to map the second sequence of bits (i.e., $\mu_2$) to the vector of baseband symbols (i.e., $a$) by using the phase shift keying (PSK) modulation. Alternatively stated, each scalar element of the vector of baseband symbols (i.e., $a$) is generated using the PSK symbol.

In accordance with an embodiment, the encoding circuit **204** is configured to select the precoding matrix from a fixed dictionary comprising matrices, where each of the matrices of the fixed dictionary is equal to one of a same unitary matrix, a same unitary matrix multiplied by a same permutation matrix, a same unitary matrix multiplied by a truncated permutation matrix from a set of non-disjoint truncated permutation matrices, a matrix from a set of matrices corresponding to subspaces of a Grassmannian space, or a matrix from a set of truncated unitary matrices. The encoding circuit **204** is configured to select the precoding matrix (i.e., $U$) from the fixed dictionary $\left\{U_1, ..., U_{2^{B_p'}}\right\}$ where, the fixed dictionary comprises a number of matrices. In an implementation, each of the matrices of the fixed dictionary $\left\{U_1, ..., U_{2^{B_p'}}\right\}$ may be the same unitary matrix (may also be represented as V) hence, the fixed dictionary $\left\{U_1, ..., U_{2^{B_p'}}\right\} = \{V, ..., V\}$. Therefore, in case of multiple transmitters, each transmitter uses the same unitary matrix (i.e., V). In another implementation, each of the matrices of the fixed dictionary $\left\{U_1, ..., U_{2^{B_p'}}\right\}$ may be the same unitary matrix (i.e., V) multiplied by the same permutation matrix (may also be represented as $\Pi$) hence, the fixed dictionary $\left\{U_1, ..., U_{2^{B_p'}}\right\} = \{V\Pi, ..., V\Pi\}$. In a yet another implementation, each of the matrices of the fixed dictionary $\left\{U_1, ..., U_{2^{B_p'}}\right\}$ may be the same unitary matrix (i.e., V) multiplied by the truncated permutation matrices (may also be represented as $\Pi_i$) that are disjoint, which means $\Pi_i \Pi_j^T = 0$ for any $i \neq j$. Therefore, the fixed dictionary $\left\{ U_1, \dots, U_{2^{B'_p}} \right\} = \{ V\Pi_1, \dots, V\Pi_1, V\Pi_2, \dots, V\Pi_2, \dots, V\Pi_n, \dots, V\Pi_n \}$.

In a yet another implementation, each of the matrices of the fixed dictionary $\left\{ U_1, \dots, U_{2^{B'_p}} \right\}$ may be the same unitary matrix (i.e., V) multiplied by the truncated permutation matrices (i.e., $\Pi_i$) that are not disjoint hence, the fixed dictionary $\left\{ U_1, \dots, U_{2^{B'_p}} \right\} = \{ V\Pi_1, \dots, V\Pi_1, V\Pi_2, \dots, V\Pi_2, \dots, V\Pi_n, \dots, V\Pi_n \}$. In a yet another implementation, each of the matrices of the fixed dictionary $\left\{ U_1, \dots, U_{2^{B'_p}} \right\}$ may be the matrix from the set of matrices corresponding to subspaces of the Grassmannian space. Each matrix may have a dimension q in the space of dimension $(T - p)$. In a yet another implementation, each of the matrices of the fixed dictionary $\left\{ U_1, \dots, U_{2^{B'_p}} \right\}$ may be the matrix from the set of truncated unitary matrices. Examples of the set of truncated unitary matrices may include but are not limited to, composition of Givens rotations, Fourier matrices, normalized Hadamard matrices, matrices concatenating Gabor frames, and the like.

The concatenation circuit **210** is configured to concatenate the first symbol vector and the second symbol vector into a baseband symbol vector. The concatenation circuit **210** is configured to multiply the first symbol vector (i.e., $x_1 \otimes \dots \otimes x_d$) and the second symbol vector (i.e., $Ua$) in order to generate the baseband symbol vector (may also be represented as $v$) according to the equation (1). The baseband symbol vector (i.e., v) may also be referred to as a transmitted symbol vector.

$$v = \begin{pmatrix} x_1 \otimes \dots \otimes x_d \\ Ua \end{pmatrix} \qquad (1)$$

The modulation circuit **211** is configured to modulate the baseband symbol vector to generate a modulated symbol vector comprising modulated symbols.

The antenna **212** is configured to transmit each modulated symbol of the modulated symbol vector in a radio frequency signal to the receiving device **104**. The radio frequency signal refers to an electromagnetic wave used to transmit each modulated symbol of the modulated symbol vector (i.e., $v$) over the air. Each modulated symbol of the modulated symbol vector (i.e., $v$) is linearly mapped to a corresponding signal frequency in order to modulate the modulated symbol vector in the radio frequency signal (e.g., a carrier wave), which is transmitted to the receiving device **104** (of FIG. 1).

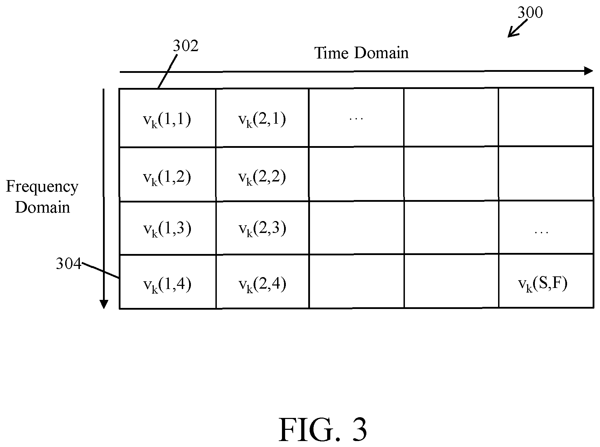

In accordance with an embodiment, the modulation circuit **211** is further configured to map the baseband symbol vector in a time-frequency grid associated with a plurality of time-frequency resources according to a pre-defined allocation matrix. In an implementation of the system **100,** there might be no block fading channel between the transmitting device **202** and the receiving device **104**. Alternatively stated, the transmitting device **202** (or the plurality of transmitting devices **102**) and the receiving device **104** may not perfectly synchronized with each other and therefore, timing and carrier frequency offsets incur during data transmission from the transmitting device **202** to the receiving device **104** and required to be compensated at the receiving device **104.** In such implementation, the time-frequency mapping is required to perform at the transmitting device **202** and the corresponding time-frequency de-mapping is also required to perform at the receiving device **104** along with the time and carrier frequency offsets estimation and compensation. The modulation circuit **211** is configured to map the baseband symbol vector in the time-frequency grid of an OFDM modulation with $F$ frequency subcarriers and $S$ time symbols, described in detail, for example, in FIG. 3. At each transmitting device (e.g., the transmitting device **202**), the frequency-domain signal representation of each element of the mapped first symbol vector with $N$ subcarriers undergo an inverse discrete Fourier transform (IDFT) to form $N$ time-domain samples. Furthermore, in order to avoid any inter-symbol interference, a cyclic prefix (CP) of length $N_{CP}$ samples, is added to each OFDM symbol (i.e., the N time-domain samples) at the transmitting device **202** through a "cyclic prefix" module. The resulting signal is then converter to an analog domain using a digital-to-analog converter and further upconverted to radio frequencies and amplified by use of an up-conversion and power amplification module, not shown here for sake of brevity.

In accordance with an embodiment, the first mapping circuit **206** is further configured to multiplyi each of the d vectors by a unitary matrix, prior to computing the Kronecker product. In an implementation, the first mapping circuit **206** is configured to multiply each of the d vectors (i.e., $x_{1,k}, \cdots, x_{d,k}$) by the unitary matrix prior to computation of the Kronecker product. The unitary matrix provides an additional degree of freedom in the design of sub-constellation. In particular, using the structured sub-constellation together with the unitary matrix enables a low-complexity at the receiving device **104** along with an improved performance with respect to timing and carrier frequency offsets estimation and compensation.

In accordance with an embodiment, the concatenation circuit **210** is further configured to multiply the result of the concatenation of the first symbol vector and the second symbol vector by a permutation matrix to form the baseband symbol vector. The concatenation circuit **210** is configured to multiply the result of the concatenation of the first symbol vector (i.e., $x_1 \otimes \cdots \otimes x_d$) and the second symbol vector (i.e., $Ua$) by the permutation matrix to form the baseband symbol vector (i.e., $v$). In a case, the concatenation circuit **210** is configured to map the baseband symbol vector (i.e., $v$) in the time-frequency grid by parameterizing the baseband symbol vector (i.e., $v$) by the pre-defined permutation matrix (i.e., $A \in \mathbb{C}^{SF \times SF}$ ) according to the equation (2)

$$v_k = A \begin{pmatrix} x_{1,k} \otimes \cdots \otimes x_{d,k} \\ U_{\mu_k} a_k \end{pmatrix} \in \mathbb{C}^{SF} \qquad (2)$$

The pre-defined permutation matrix (i.e., $A$) can be seen as a way to map the modulated symbol vector $\begin{pmatrix} x_{1,k} \otimes \cdots \otimes x_{d,k} \\ U_{\mu_k} a_k \end{pmatrix}$ on the time-frequency grid.

Thus, the transmitting device **202** provides an improved communication reliability and supports a large number of users simultaneously. Moreover, the transmitting device **202** combines the tensor-based modulation (TBM) with the coherent modulation and hence, manifests an improved spectral efficiency over the conventional tensor-based modulation in case of large bandwidth. Alternatively stated, the transmitting device **202** transmits a part of information payload by use of tensor-based modulation and transmits rest of the information payload by use of coherent modulation. Additionally, the transmitting device **202** may be used in a block fading channel as well as in a non-block fading channel. Since, the concatenation circuit **210** and the modulation circuit **211** of the transmitting device **202** includes time frequency mapping between elements of the first symbol vector and the used physical resources, which further enables an accurate estimation and compensation of timing and carrier frequency offsets at the receiving device **104** in the non-block fading channel and hence, the improved communication reliability is obtained in the communication system comprising the transmitting device **202** and the receiving device **104.** Additionally, the transmitting device **202** enables an improved waveform design for the massive random-access communication with reduced probability of decoding error and an enhanced spectral efficiency.

FIG. 2C is a block diagram that illustrates various exemplary components of a transmitting device, in accordance with yet another embodiment of the present disclosure. FIG. 2C is described in conjunction with elements from FIGs. 1, 2A and 2B. With reference to FIG. 2C, there is shown a block diagram of the transmitting device **202.**

The block diagram of the transmitting device **202** corresponds to the block diagram of the transmitting device **202** (of FIG. 2B) except that the encoding circuit **204** is configured to directly apply a binary code on the input message (i.e., the binary message, m = 1010001) and output a main sequence of bits (may also be represented as $\mu$) without splitting the input message (i.e., binary message, m = 1010001) into the first message (i.e., $m_1$ = 101) and the second message (i.e., $m_2$ = 0001) and then encode the first message and the second message, respectively.

In accordance with an embodiment, the encoding circuit **204** is configured to encode the input message into a main sequence of bits, and split the main sequence of bits into the first sequence of bits and the second sequence of bits. In the block diagram of the transmitting device **202,** it is shown that the encoding circuit **204** is configured to directly encode the input message (i.e., binary message, m = 1010001) into the main sequence of bits (i.e., $\mu$) by use of the binary code. Furthermore, the encoding circuit **204** is configured to split the main sequence of bits (i.e., $\mu$) into the first sequence of bits (i.e., $\mu_1$) and the second sequence of bits (i.e., $\mu_2$).

FIG. 3 is an illustration of time-frequency mapping of a modulated symbol vector in a time-frequency grid, in accordance with an embodiment of the present disclosure. FIG. 3 is described in conjunction with elements from FIGs. 1, 2A, 2B, and 2C. With reference to FIG. 3, there is shown a time-frequency grid **300** that represents a plurality of time-frequency resources. The time-frequency grid **300** includes an X-axis **302** and a Y-axis **304.** The X-axis **302** represents time-domain representation and the Y-axis **304** represents frequency-domain representation.

The modulation circuit **211** of the transmitting device **202** is configured to map the baseband symbol vector (i.e., $v_k$) in the time-frequency grid **300** of an OFDM modulation with $F$ frequency subcarriers and S time symbols. The plurality of time-frequency resources of the time-frequency grid **300** are defined according to the pre-defined allocation matrix, where each element of the baseband symbol vector (i.e., $v_k$) is mapped onto one of the time-frequency resources of the time-frequency grid **300.** For example, a complex value (i.e., $v_k(s,f)$) corresponds to an element of the baseband symbol vector (i.e., $v_k$) which is transmitted at a $s$-th time resource and a $f$-th frequency resource. Therefore, the baseband symbol vector (i.e., $v_k$) may also be referred to as a $SF$ dimensional vector. To be consistent with the vectorization operation related to the tensor structure, the $SF$ dimensional vector may be represented as a column-first order vectorization of the time-frequency matrix as depicted by the equation (3).

$$v_k = \begin{pmatrix} v_k(1,1) \\ v_k(1,2) \\ \vdots \\ v_k(S,F) \end{pmatrix} \qquad\qquad (3)$$

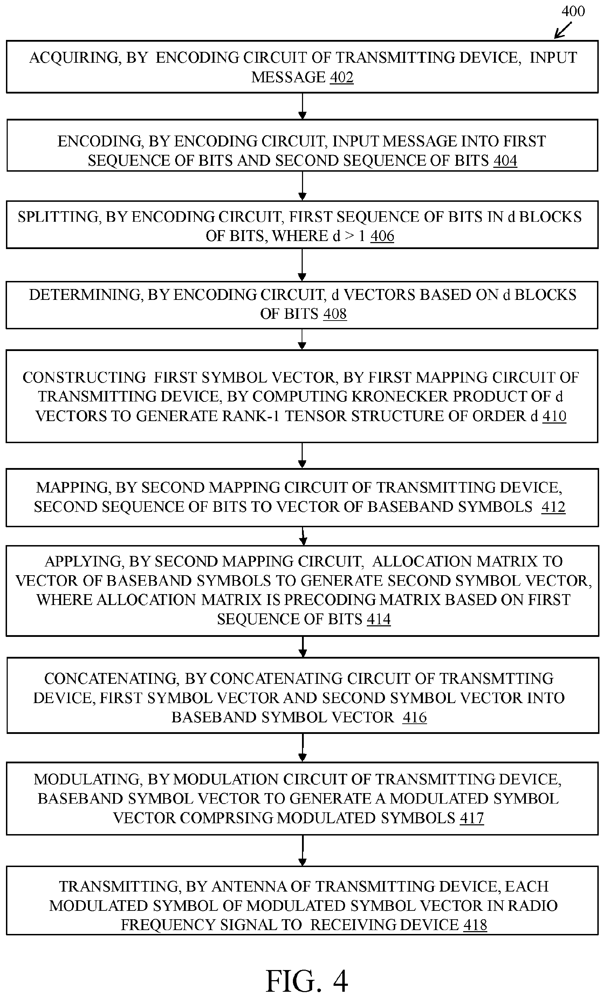

FIG. 4 is a flowchart of a method for a random-access communication, in accordance with an embodiment of the present disclosure. FIG. 4 is described in conjunction with elements from FIGs. 1, 2A, 2B, 2C, and 3. With reference to FIG. 4, there is shown a method **400** that includes steps **402** to **418**. The method **400** is executed by each of the plurality of transmitting devices **102** (of FIG. 1) or by the transmitting device **202** (of FIG. 2).

The method **400** is provided for random-access communication in which a random number of the plurality of transmitting devices **102** (or the transmitting device **202**) may be active at a time and may be configured to transmit a plurality of radio frequency signals concurrently to the receiving device **104** without any prior resource request (or grant). Moreover, the method **400** is applicable in two implementation scenarios, first is where there is a block fading channel between each of the plurality of transmitting devices **102** (or the transmitting device **202**) and the receiving device **104,** and second is where there is not a block fading channel between each of the plurality of transmitting devices **102** (or the transmitting device **202**) and the receiving device **104.** In the first implementation scenario, each of the plurality of transmitting devices **102** (or the transmitting device **202**) and the receiving device **104** are in perfect synchronization with each other and hence, no timing and carrier frequency offsets occur in a system (e.g., the system **100,** of FIG. 1). In the second implementation scenario, each of the plurality of transmitting devices **102** (or the transmitting device **202**) and the receiving device **104** are not in perfect synchronization with each other and hence, timing and carrier frequency offsets incur during transmission from each of the plurality of transmitting devices **102** (or the transmitting device **202**) to the receiving device **104** and required to be compensated at the receiving device **104.**

At step **402**, the method **400** comprises acquiring, by the encoding circuit **204** of the transmitting device **202,** an input message. In an implementation, the input message corresponds to a binary message comprising a certain number of bits.

At step **404,** the method **400** further comprises encoding, by the encoding circuit **204,** the input message into a first sequence of bits and a second sequence of bits. The input message acquired by the encoding circuit **204** is further encoded into the first sequence of bits and the second sequence of bits either by use of a binary encoder or a polar encoder, and the like.

In accordance with an embodiment, encoding, by the encoding circuit **204,** comprises splitting the input message into a first message and a second message, encoding the first message into the first sequence of bits, and encoding the second message into the second sequence of bits. In an implementation, the encoding circuit **204** is configured to split the input message into the first message and the second message and thereafter, encode the first message into the first sequence of bits and the second message into the second sequence of bits, respectively, described in detail, for example, in FIG. 2B.

In accordance with an embodiment, encoding, by the encoding circuit **204,** comprises encoding the input message into a main sequence of bits, and splitting the main sequence of bits into the first sequence of bits and the second sequence of bits. In another implementation, the encoding circuit **204** is configured to encode the input message into the main sequence of bits and split the main sequence of bits into the first sequence of bits and the second sequence of bits, described in detail, for example, in FIG. 2C.

In accordance with an embodiment, encoding, by the encoding circuit **204,** uses a binary code. The encoding circuit **204** is configured to encode the input message using the binary code, such as excess-3 codes, Gray codes, reflective codes, sequential codes, and the like.

At step **406,** the method **400** further comprises splitting, by the encoding circuit **204,** the first sequence of bits in d blocks of bits, where d > 1. The first sequence of bits is split into d block of bits, where d is an arbitrary number and greater than 1.

At step **408,** the method **400** further comprises determining, by the encoding circuit **204,** d vectors based on the d blocks of bits. The d block of bits are further encoded into the d vectors based on the number of bits in each block of the d blocks.

At step **410,** the method **400** further comprises constructing a first symbol vector, by the first mapping circuit **206** of the transmitting device **202,** by computing a Kronecker product of the d vectors to generate a rank-1 tensor structure of order d. The first mapping circuit **206** is configured to construct the first symbol vector by computing the Kronecker product of the d vectors obtained from the d block of bits in order to generate the rank-1 tensor structure of order d. The constructed first symbol vector may also be referred to as the rank-1 tensor structure of order d which means that the constructed first symbol vector may be construed as a d-dimensional array of real and complex numbers.

At step **412,** the method **400** further comprises mapping, by the second mapping circuit **208** of the transmitting device **202,** the second sequence of bits to a vector of baseband symbols. The second mapping circuit **208** is configured to map the second sequence of bits to the vector of baseband symbols of dimensions q using a coherent modulation.

In accordance with an embodiment, mapping, by the second mapping circuit **208,** the second sequence of bits to the vector of baseband symbols comprises using a quadrature amplitude modulation or a phase shift keying modulation. In an implementation, the second mapping circuit **208** may be configured to map the second sequence of bits to the vector of baseband symbols by using the quadrature amplitude modulation (QAM). Alternatively stated, each scalar element of the vector of baseband symbols is generated using the QAM symbol. In another implementation, the second mapping circuit **208** may be configured to map the second sequence of bits to the vector of baseband symbols by using the phase shift keying (PSK) modulation. Alternatively stated, each scalar element of the vector of baseband symbols is generated using the PSK symbol.

At step **414,** the method **400** further comprises applying, by the second mapping circuit **208,** an allocation matrix to the vector of baseband symbols to generate a second symbol vector, where the allocation matrix is a precoding matrix based on the first sequence of bits. The second mapping circuit **208** is configured to apply the allocation matrix to the vector of baseband symbols to generate the second symbol vector. The allocation matrix is also referred to as the precoding matrix that is determined on the basis of the first sequence of bits using a precoder selection.

In accordance with an embodiment, encoding, by the encoding circuit **204,** comprises selecting the precoding matrix from a fixed dictionary comprising matrices, where each of the matrices of the fixed dictionary is equal to one of a same unitary matrix, a same unitary matrix multiplied by a same permutation matrix, a same unitary matrix multiplied by one truncated permutation matrix from a set of non-disjoint truncated permutation matrices, a matrix from a set of matrices corresponding to subspaces of a Grassmannian space, or a matrix from a set of truncated unitary matrices. The encoding circuit **204** is configured to select the precoding matrix from the fixed dictionary where, the fixed dictionary comprises a number of matrices. In an implementation, each of the matrices of the fixed dictionary may be the same unitary matrix. In another implementation, each of the matrices of the fixed dictionary may be the same unitary matrix multiplied by the same permutation matrix. In a yet another implementation, each of the matrices of the fixed dictionary may be the same unitary matrix multiplied by the truncated permutation matrices that are disjoint. In a yet another implementation, each of the matrices of the fixed dictionary may be the same unitary matrix multiplied by the truncated permutation matrices that are not disjoint. In a yet another implementation, each of the matrices of the fixed dictionary may be the matrix from the set of matrices corresponding to subspaces of the Grassmannian space. In a yet another implementation, each of the matrices of the fixed dictionary may be the matrix from the set of truncated unitary matrices.

At step **416,** the method **400** further comprises concatenating, by the concatenation circuit **210** of the transmitting device **202,** the first symbol vector and the second symbol vector into a baseband symbol vector. The concatenation circuit **210** is configured to concatenate the first symbol vector and the second symbol vector in order to generate the baseband symbol vector.

At step **417,** the method **400** further comprises modulating, by the modulation circuit **211** of the transmitting device 202, the baseband symbol vector to generate a modulated symbol vector comprising modulated symbols.

At step **418,** the method **400** further comprises transmitting, by the antenna **212** of the transmitting device **202,** each modulated symbol of the modulated symbol vector in a radio frequency signal to the receiving device **104.** The radio frequency signal refers to an electromagnetic wave used to transmit each modulated symbol of the modulated symbol vector (i.e., $v$) over the air. Each modulated symbol of the modulated symbol vector (i.e., $v$) is linearly mapped to a corresponding signal frequency in order to modulate the modulated symbol vector in the radio frequency signal (e.g., a carrier wave), which is transmitted to the receiving device **104** (of FIG. 1).

In accordance with an embodiment, constructing the modulated symbol vector, by the modulation circuit **211,** further comprises mapping the baseband symbol vector in a time-frequency grid associated with a plurality of time-frequency resources according to a pre-defined allocation matrix. In case of imperfect synchronization between each of the plurality of transmitting devices **102** (or the transmitting device **202**) and the receiving device **104,** the modulation circuit **211** is configured to map the baseband symbol vector into the time frequency grid associated with the plurality of time-frequency resource, in order to, combined with the concatenation circuit **210,** accurately and efficiently estimate and compensate the timing and carrier frequency offsets at the receiving device **104** which occur due to the imperfect synchronization between each of the plurality of transmitting devices **102** (or the transmitting device **202**) and the receiving device **104.** The modulation circuit **211** is configured to map the baseband symbol vector in the time-frequency grid of an OFDM modulation with F frequency subcarriers and S time symbols, described in detail, for example, in FIG. 3.

In accordance with an embodiment, the method **400** further comprises multiplying, by the first mapping circuit **206,** each of the d vectors by a unitary matrix, prior to computing the Kronecker product. In an implementation, the first mapping circuit **206** is configured to multiply each of the d vectors by the unitary matrix prior to computation of the Kronecker product.

In accordance with an embodiment, the method **400** further comprises multiplying, by the concatenation circuit **210,** the result of the concatenation of the first symbol vector and the second symbol vector by a permutation matrix to form the baseband symbol vector. The concatenation circuit **210** is configured to multiply the result of the concatenation of the first symbol vector and the second symbol vector by the permutation matrix to form the baseband symbol vector. In a case, the concatenation circuit **210** is configured to multiply the baseband symbol vector by the pre-defined permutation matrix.

The steps **402** to **418** are only illustrative and other alternatives can also be provided where one or more steps are added, one or more steps are removed, or one or more steps are provided in a different sequence without departing from the scope of the claims herein.

In one aspect, a computer program product is provided performing the method **400** when executed by one or more processors (e.g., the processor **214** of the transmitting device **202**) in a computer system. In another aspect, a computer system is provided comprising one or more processors (e.g., the processor **214**) and one or more memories (e.g., the memory **216**), the one or more memories (i.e., the memory **216**) storing program instructions which, when executed by the one or more processors (i.e., the processor **214**), cause the one or more processors (i.e., the processor **214**) to execute the method **400.** As previously mentioned, in an implementation, some or all of the one or more memories may be part of some or all of the one or more processors. In another implementation, all of the one or more memories are components separated from the one or more processors.

In another aspect, a processor is provided comprising the various circuits configured to execute the method **400,** such as the encoding circuit **204,** the first mapping circuit **206,** the second mapping circuit **208,** the concatenation circuit **210,** and the modulation circuit **211.**

In yet another aspect, the present disclosure provides a non-transitory computer-readable medium having stored thereon, computer-implemented instructions that, when executed by a computer, causes the computer to execute operations of the method **400.**

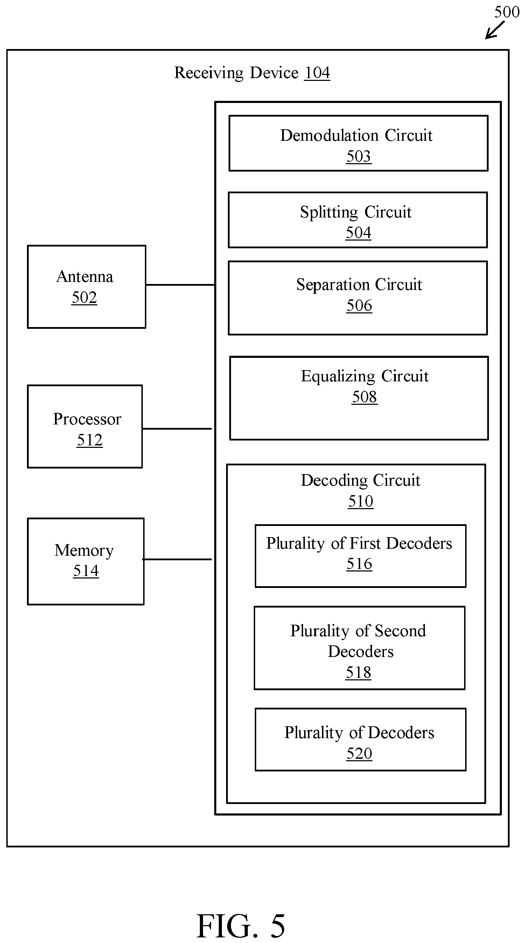

FIG. 5 is a block diagram that illustrates various exemplary components of a receiving device, in accordance with an embodiment of the present disclosure. FIG. 5 is described in conjunction with elements from FIGs. 1, and 2. With reference to FIG. 5, there is shown a block diagram **500** of the receiving device **104** (of FIG. 1) that includes an antenna **502,** a demodulation circuit **503,** a splitting circuit **504,** a separation circuit **506,** an equalizing circuit **508,** a decoding circuit **510,** a processor **512** and a memory **514.** The decoding circuit **510** comprises a plurality of first decoders **516,** a plurality of second decoders **518** and a plurality of decoders **520.** In an implementation, each of the demodulation circuit **503,** the splitting circuit **504,** the separation circuit **506,** the equalizing circuit **508,** and the decoding circuit **510** may be a part of the processor **512.** In another implementation, the demodulation circuit **503,** the splitting circuit **504,** the separation circuit **506,** the equalizing circuit **508,** and the decoding circuit **510** are separate circuits or modules (and may not be a part of the processor **512**). The demodulation circuit **503,** the splitting circuit **504,** the separation circuit **506,** the equalizing circuit **508,** and the decoding circuit **510** are communicatively coupled to the memory **514** and the antenna **502.** The receiving device **104** includes at least one antenna, such as the antenna **502** (or 1, 2, 3..., M number of antennas).

The antenna **502** may include suitable logic, circuitry, and/or interfaces that is configured to receive a plurality of radio frequency signals concurrently from a plurality of transmitting devices, such as the plurality of transmitting devices **102** (of FIG. 1). Beneficially, the number of receiving antennas at the receiving device **104** is potentially less than number of transmitting signals. Examples of implementation of the antenna **502** is similar to that of the antenna **212** (FIG. 2A).

The demodulation circuit **503** may include suitable logic, circuitry, and/or interfaces that is configured to demodulate the received radio frequency signals into demodulated signals.

The splitting circuit **504** may include suitable logic, circuitry, and/or interfaces that is configured to split the demodulated signals into first baseband signals and second baseband signals.

The separation circuit **506** may include suitable logic, circuitry, and/or interfaces that is configured to generate a plurality of first estimated symbol vectors from the first baseband signals, using a rank-1 tensor structure of order d associated with each transmitting device, where d > 1, and to generate a plurality of estimated channel parameters associated with the plurality of transmitting devices 102 and a plurality of estimated precoding matrices associated with the plurality of transmitting devices 102, based on the first baseband signals.

The equalizing circuit **508** may include suitable logic, circuitry, and/or interfaces that is configured to estimate a plurality of second estimated symbol vectors from the second baseband signals, based on the plurality of estimated precoding matrices and the plurality of estimated channel parameters.

The decoding circuit **510** may include suitable logic, circuitry, and/or interfaces that is configured to decode each of the first and second estimated symbol vectors to generate a plurality of decoded messages, each decoded message comprising a first sequence of bits that corresponds to a first part of data and a second sequence of bits that corresponds to a second part of data associated with a corresponding transmitting device amongst the plurality of transmitting devices (102).

The processor **512** may include suitable logic, circuitry, and/or interfaces that is configured to execute instructions stored in the memory **514.** Examples of implementation of the processor **512** is similar to that of the processor **214** (of FIG. 2A).

The memory **514** may include suitable logic, circuitry, and/or interfaces that is configured to store machine code and/or instructions executable by the processor **512.** The memory **514** may temporally store one or more decoded messages. Examples of implementation of the memory **514** is similar to that of the memory **216** (of FIG. 2A). The memory **514** may store an operating system and/or a computer program product to operate the receiving device **104.** A computer readable storage medium for providing a non-transient memory may include, but is not limited to, an electronic storage device, a magnetic storage device, an optical storage device, an electromagnetic storage device, a semiconductor storage device, or any suitable combination of the foregoing.

In operation, the receiving device **104** used for random access communication, comprises the antenna **502** that is configured to receive a plurality of radio frequency signals concurrently from the plurality of transmitting devices **102**. In a massive random-access scenario, the antenna **502** of the receiving device **104** is configured to receive the plurality of radio frequency signals concurrently from the plurality of transmitting devices, such as the plurality of transmitting devices **102** (of FIG. 1), over $M$ antennas and $T$ channel accesses.

The receiving device **104** further comprises the demodulation circuit **503** that is configured to demodulate the received radio frequency signals into demodulated signals.

The receiving device **104** further comprises the splitting circuit **504** that is configured to split the demodulated signals into first baseband signals and second baseband signals. In case of the perfect synchronization between each of the plurality of transmitting devices **102** and the receiving device **104**, the splitting circuit **504** of the receiving device **104** is configured to split the plurality of demodulated signals into the first baseband signals (or a first $pM$-dimensional vector, $y_p$) and the second baseband signals (or a second $(T - p)M$-dimensional vector, $y_q$). In this way, the plurality of demodulated signals received concurrently from the plurality of transmitting devices **102** in form of the first baseband signals (i.e., $y_p$) and the second baseband signals (i.e., $y_q$) may be represented according to the equation (4)

$$y = \binom{y_p}{y_q} = \sum_{k=1}^{K} v_k \otimes h_k + w = \begin{pmatrix} \sum_{k=1}^{K} x_{1,k} \otimes \ldots \otimes x_{d,k} \otimes h_k \\ \sum_{k=1}^{K} U_{\mu_{1,k}} a_k \otimes h_k \end{pmatrix} + \binom{w_p}{w_q} \qquad (4)$$

The vector $w_p$ and $w_q$ correspond to noise terms received with the first baseband signals (i.e., $y_p$) and the second baseband signals (i.e., $y_q$), respectively.

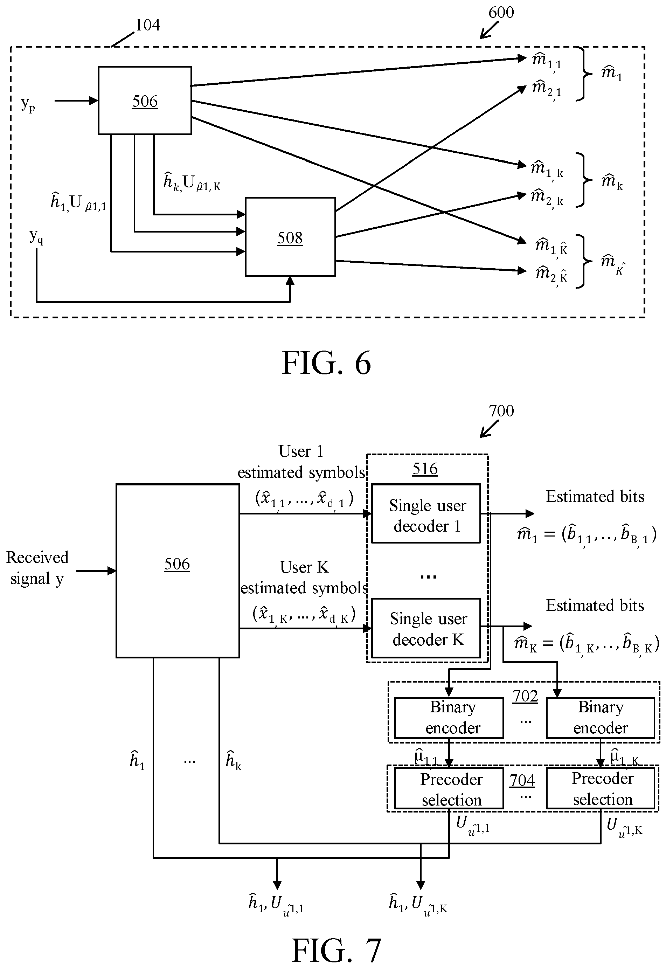

The receiving device **104** further comprises the separation circuit **506** that is configured to generate a plurality of first estimated symbol vectors from the first baseband signals, using a rank-1 tensor structure of order d associated with each transmitting device, where d > 1, and generate a plurality of estimated channel parameters associated with the plurality of transmitting devices **102** and a plurality of estimated precoding matrices associated with the plurality of transmitting devices **102**, based on the first baseband signals. The separation circuit **506** is configured to generate a plurality of first estimated symbol vectors from the first baseband signals which are transmitted over $p$ grid resource elements, using the rank-1 tensor structure of order d associated with each transmitting device, where d > 1, this may also be referred to as a tensor decomposition. The separation circuit **506** is further configured to generate the plurality of estimated channel parameters associated with the plurality of transmitting devices **102** and the plurality of estimated precoding matrices associated with the plurality of transmitting devices **102**, based on the first baseband signals, described in detail, for example, in FIGs. 6, 7 and 9.

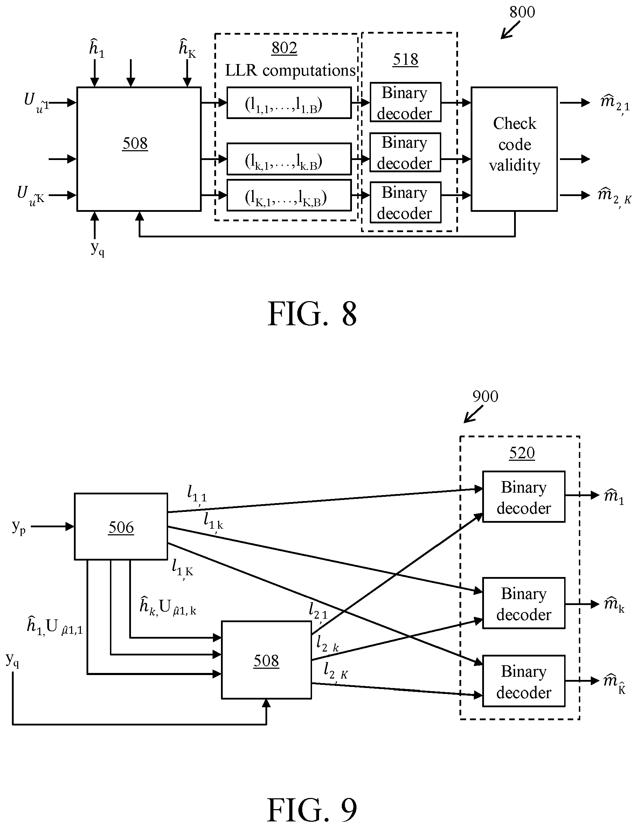

The receiving device **104** further comprises the equalizing circuit **508** that is configured to generate a plurality of second estimated symbol vectors from the second baseband signals, based on the plurality of estimated precoding matrices and the plurality of estimated channel parameters. The equalizing circuit **508** is configured to generate the plurality of second estimated symbol vectors from the second baseband signals which are transmitted over the resource elements occupied by the coherent modulation, based on the plurality of estimated precoding matrices and the plurality of estimated channel parameters computed by using the first radio frequency signals, described in detail, for example, in FIG. 8.

The receiving device **104** further comprises the decoding circuit **510** that is configured to decode each of the first and second estimated symbol vectors to generate a plurality of decoded messages, each decoded message comprising a first sequence of bits that corresponds to a first part of data and a second sequence of bits that corresponds to a second part of data associated with a corresponding transmitting device amongst the plurality of transmitting devices **102**.

The decoding circuit **510** is configured to decode each of the first estimated symbol vectors to generate the plurality of first decoded messages (may also be represented as $\hat{m}_{1,1}, \ldots, \hat{m}_{1,k}, \ldots, \hat{m}_{1,\hat{K}}$). Each of the plurality of first decoded messages, for example, a first decoded message (may also be represented as $\hat{m}_{1,1}$) comprises the first sequence of bits (may also be represented as $\hat{m}_{1,1} = \hat{b}_{1,1}, \ldots, \hat{b}_{B,1}$) that corresponds to the first part of data associated with the corresponding transmitting device (e.g., the first transmitting device **102A**) of the plurality of transmitting devices **102**.

The decoding circuit **510** is further configured to decode each of the second estimated symbol vectors to generate a plurality of second decoded messages, each of the second decoded messages comprising a second sequence of bits corresponding to a second part of data associated with a corresponding transmitting device amongst the plurality of transmitting devices **102**. The decoding circuit **510** is configured to decode each of the second estimated symbol vectors to generate the plurality of second decoded messages (may also be represented as $\hat{m}_{2,1}, \ldots, \hat{m}_{2,k}, \ldots, \hat{m}_{2,\hat{K}}$). Each of the second decoded messages, for example, a second decoded message (may also be represented as $\hat{m}_{2,1}$) comprises the second sequence of bits (may also be represented as $\hat{m}_{2,1} = \hat{b}_{1,2}, \ldots, \hat{b}_{B,2}$) that corresponds to the second part of data associated with the corresponding transmitting device (e.g., the first transmitting device **102A**) amongst the plurality of transmitting devices **102**.

In accordance with an embodiment, the splitting circuit **504** is further configured to apply a predefined permutation matrix to the demodulated signals to generate the first baseband signals and the second baseband signals. This predefined permutation corresponds to reverting the effect of the predefined permutation matrix (i.e., $A$) used at the transmitting device **202** (of FIG. 2) by applying the predefined permutation matrix (may also be represented as $(A \otimes I_M)^{-1}$) to each of the first and second baseband signals at the receiving device **104**. After applying the pre-defined permutation matrix (i.e., $(A \otimes I_M)^{-1}$) to each of the first and second baseband signals, the plurality of first and second estimated symbol vectors is generated at the receiving device **104**.

In accordance with an embodiment, the separation circuit **506** is further configured to estimate a time offset and a frequency offset in each of the first estimated symbol vectors to generate a plurality of time offsets and a plurality of frequency offsets, and apply a time offset compensation, based on the corresponding time offset, and a frequency offset compensation, based on the corresponding frequency offset, to the corresponding first estimated symbol vector. In a case, when there is no block fading channel between each of the plurality of transmitting devices **102** (or the transmitting device **202**) and the receiving device **104,** timing and carrier frequency offsets occur at each of the plurality of transmitting devices **102** and required to be compensated at the receiving device **104**. Therefore, the separation circuit **506** is further configured to estimate as well as compensate the timing and carrier frequency offsets at the receiving device **104**. Alternatively stated, the separation circuit **506** is configured to estimate the time offset and the carrier frequency offset in each of the first estimated symbol vectors, and apply the time offset compensation based on the corresponding time offset, and the frequency offset compensation, based on the corresponding frequency offset, to the corresponding estimated symbol vector.

Thus, the receiving device **104** provides an improved communication reliability and supports a large number of users simultaneously. Moreover, the receiving device **104** detects a set of active transmitting devices among the plurality of transmitting devices **102** as well as estimates the respective channels of the set of active transmitting devices among the plurality of transmitting devices **102** by virtue of the separation circuit **506,** and the equalizing circuit **508**. Moreover, the equalizing circuit **508** is configured to use the plurality of time offsets, the plurality of frequency offsets, the plurality of estimated precoding matrices and the plurality of estimated channel parameters to de-map the coherent modulation used at the transmitting device **202**. Additionally, the receiving device **104** may be used in a block fading channel as well as in a non-block fading channel. By virtue of the time-frequency mapping of elements of the first symbol vector and rotation of each element of the first symbol vector by use of the unitary matrix used at the transmitting device **202** and the separation circuits **506,** an accurate estimation and compensation of timing and carrier frequency offsets can be achieved which further leads to the reduced probability of decoding error and the improved communication reliability at the receiving device **104**.

FIG. 6 is an illustration of a receiving device, in accordance with an embodiment of the present disclosure. FIG. 6 is described in conjunction with elements from FIGs. 1, 2A, 2B, 2C, 3, 4, and 5. With reference to FIG. 6, there is shown an illustration **600** of the receiving device **104** (of FIG. 1) that includes the separation circuit **506,** and the equalizing circuit **508**.

The first baseband signals (i.e., the first $pM$-dimensional vector, $y_p$) is processed by the separation circuit **506**. The separation circuit **506** may also be referred to as a tensor-based modulation (TBM) receiver. The separation circuit **506** is configured to generate a plurality of first sub-messages (may also be represented as $\hat{m}_{1,1}, \ldots, \hat{m}_{1,k}, \ldots, \hat{m}_{1,\hat{K}}$) with respect to each of the plurality of transmitting devices **102** as well as their associated plurality of estimated channel parameters (may also be represented as $\hat{h}_1, \ldots, \hat{h}_K$), described in detail, for example, in FIG. 7. Furthermore, the separation circuit **506** is configured to generate the plurality of estimated precoding matrices (may also be represented as $U_{\hat{\mu}1,1}, \ldots, U_{\hat{\mu}1,K}$) associated with the plurality of transmitting devices **102,** based on the first radio frequency signals. Alternatively stated, the separation circuit **506** is configured to generate a plurality of coded first sub-messages, for example, a coded first sub-message (may also be represented as $\hat{\mu}_{1,k}$) and its corresponding precoding matrix (may also be represented as $U_{\hat{\mu}_{1,k}}$). Moreover, the second baseband signals (i.e., the second $(T - p)M$-dimensional vector, $y_q$) is processed by the equalizing circuit **508**. The equalizing circuit **508** may also be referred to as a coherent receiver. The equalizing circuit **508** is configured to generate a plurality of second sub-messages (may also be represented as $\hat{m}_{2,1}, \ldots, \hat{m}_{2,k}, \ldots, \hat{m}_{2,\hat{K}}$) with respect to each of the plurality of transmitting devices **102** using the plurality of estimated precoding matrices (i.e., $U_{\hat{\mu}1,1}, \ldots, U_{\hat{\mu}1,K}$) and the plurality of estimated channel parameters $\hat{h}_1, \ldots, \hat{h}_K$, described in detail, for example, in FIG. 8. Thereafter, the plurality of second sub-messages (i.e., $\hat{m}_{2,1}, \ldots, \hat{m}_{2,k}, \ldots, \hat{m}_{2,\hat{K}}$) generated by the equalizing circuit **508** is concatenated with the plurality of first sub-messages (i.e., $\hat{m}_{1,1}, \ldots, \hat{m}_{1,k}, \ldots, \hat{m}_{1,\hat{K}}$) generated by the separation circuit **506** in order to form a plurality of estimated messages (may also be represented as $\hat{m}_k$) of the K-th transmitting device **102K** of the plurality of transmitting devices **102**.

FIG. 7 is an illustration of a separation circuit of a receiving device, in accordance with an embodiment of the present disclosure. FIG. 7 is described in conjunction with elements from FIGs. 1, 2A, 2B, 2C, 3, 4, 5, and 6. With reference to FIG. 7, there is shown an illustration **700** of the separation circuit **506** and the decoding circuit **510** of the receiving device **104** (of FIG. 1). There is further shown a plurality of binary encoders **702** and a plurality of precoder selection circuits **704**.

By processing the received first baseband signals (i.e., the first $pM$-dimensional vector, $y_p$), the separation circuit

**506** is configured to generate the plurality of first estimated symbol vectors. Thereafter, the plurality of first estimated symbol vectors is subjected to a tensor decomposition (e.g., a canonical polyadic decomposition) corresponding to each of the plurality of transmitting devices **102**. The tensor decomposition is used to separate the plurality of first estimated symbol vectors into single-user components, and hence, outputs an estimation of $\hat{K}$ vector symbols $\hat{v}_k$ for $k = 1, ..., \hat{K}$. The integer $\hat{K}$ denotes the estimated number of transmitted messages. For example, a first estimated symbol vector (may also be represented as $\hat{x}_{1,1} ... , \hat{x}_{d,1}$) corresponds to the first transmitting device **102A** and a K-th estimated symbol vector (may also be represented as $\hat{x}_{1,k} ... , \hat{x}_{d,k}$) corresponds to the K-th transmitting device **102K** of the plurality of transmitting devices **102**. Additionally, during the tensor decomposition, the separation circuit **506** is configured to generate the plurality of estimated channel parameters (i.e., $\hat{h}_1, ... , \hat{h}_K$) associated with the plurality of transmitting devices **102**.

In accordance with an embodiment, the decoding circuit **510** comprises the plurality of first decoders **516,** each configured to decode one of the first estimated symbol vectors generated by the separation circuit **506** to generate a plurality of first decoded messages, each first decoded message comprising a first sequence of bits corresponding to a first part of data associated with a corresponding transmitting device amongst the plurality of transmitting devices **102**. After processing the received first radio frequency signals (i.e., the first $pM$-dimensional vector, $y_p$) into the plurality of first estimated symbol vectors, the plurality of first decoders **516** (or single-user decoders) of the decoding circuit **510** is configured to decode one of the first estimated symbol vectors to generate the plurality of first decoded messages (i.e., $\hat{m}_{1,1}, ... , \hat{m}_{1,k}, ... , \hat{m}_{1,\hat{K}}$). For example, the first estimated symbol vector (i.e., $\hat{x}_{1,1} ... , \hat{x}_{d,1}$) corresponding to the first transmitting device **102A** is used to generate a first decoded message (may also be represented as $\hat{m}_1$) of the plurality of first decoded messages. Similarly, the K-th estimated symbol vector (i.e., $\hat{x}_{1,k} ... , \hat{x}_{d,k}$) corresponding to the K-th transmitting device **102K** is used to generate a K-th decoded message (may also be represented as $\hat{m}_k$) of the plurality of first decoded messages. Each of the plurality of first decoded messages comprises the first sequence of bits corresponding to the first part of data associated with the corresponding transmitting device amongst the plurality of transmitting devices **102**. For example, the first decoded message (i.e., $\hat{m}_1$) comprises the first sequence of bits (may also be represented as $\hat{b}_{1,1}, ... , \hat{b}_{B,1}$) that corresponds to the first part of data associated with the corresponding transmitting device (e.g., the first transmitting device **102A**) amongst the plurality of transmitting devices **102**. Similarly, the K-th decoded message (i.e., $\hat{m}_k$) comprises the K-th sequence of bits (may also be represented as $\hat{b}_{1,k}, ... , \hat{b}_{B,k}$) that corresponds to the first part of data associated with the corresponding transmitting device (e.g., the K-th transmitting device **102K**) amongst the plurality of transmitting devices **102**.

Thereafter, the plurality of first decoded messages (i.e., $\hat{m}_{1,1}, ... , \hat{m}_{1,k}, ... , \hat{m}_{1,\hat{K}}$) are subjected to the plurality of binary encoders **702** and the plurality of precoder selection circuits **704** to estimate the plurality of precoding matrices (i.e., $U_{\hat{\mu}1,1}, ... , U_{\hat{\mu}1,K}$) associated with the plurality of transmitting devices **102**.

FIG. 8 is an illustration of an equalizing circuit of a receiving device, in accordance with an embodiment of the present disclosure. FIG. 8 is described in conjunction with elements from FIGs. 1, 2A, 2B, 2C, 3, 4, 5, 6, and 7. With reference to FIG. 8, there is shown an illustration **800** of the equalizing circuit **508** and the decoding circuit **510** of the receiving device **104** (of FIG. 1). There is further shown a soft de-mapper **802**.

The equalizing circuit **508** can be implemented using any classical coherent receiver (e.g., a minimum mean square error, MMSE equalizer). The equalizing circuit **508** of the receiving device **104** is configured to estimate a plurality of second estimated symbol vectors based on the second radio frequency signals (i.e., the second $(T - p)M$-dimensional vector, $y_q$) using a system of linear equations according to the equation (5)

$$y_q = \sum_{k=1}^{K} U_{\mu_{1,k}} a_k \otimes h_k + w_q \qquad (5)$$

An approximate solution of the equation (5) is obtained by replacing the $h_k$ by the plurality of estimated channel parameters (i.e., $\hat{h}_k$) and the precoding matrices $U_{\mu_{1,k}}$ by the plurality of estimated precoding matrices (i.e., $U\hat{\mu}_{1,k}$) in the equation (6), where both $\hat{h}_k$ and $\hat{\mu}_{1,k}$ are estimated by the separation circuit **506** of the receiving device **104** (or the TBM receiver), and solving the equation (6) in order to estimate the plurality of second estimated symbol vectors by computing a minimum mean square error (MMSE).

$$y_q = \sum_{k=1}^{K} U_{\hat{\mu}_{1,k}} a_k \otimes \hat{h}_k + w_q \qquad (6)$$

After applying the equalizing circuit **508** on the second radio frequency signals (i.e., the second $(T - p)M$-dimensional vector, $y_q$), the soft de-mapper **802** is used in order to compute log-likelihood ratios (LLR) which represents the inferred values of the bits encoded in $a_1...a_K$. The LLR computations (may also be represented as $l_{1,1}, ... , l_{1,B}, l_{k,1}, ... , l_{k,B}, l_{K,1}, ... , l_{K,B}$) are then processed by the plurality of second decoders **518** (e.g., binary decoders) of the decoding circuit **510**.

The decoding circuit **510** further comprises the plurality of second decoders **518,** each configured to decode one of the second estimated symbol vectors generated by the equalization circuit **508** (or the MMSE equalizer) to generate a plurality of second decoded messages, each of the second decoded messages comprising a second sequence of bits corresponding to a second part of data associated with a corresponding transmitting device amongst the plurality of transmitting devices **102.** For each of the generated plurality of second decoded messages (i.e., $\hat{m}_{2,1}, \ldots, \hat{m}_{2,k}$), code validity is checked. The code validity can be checked, for example, if code redundancy checksum (CRC) bits are included in the binary code in which case the code is valid when the CRC constraints are satisfied. For the second decoded messages that do not satisfy the code validity, the process of checking the code validity is iterated for a predefined number of times. This may also be noted that the parameter $q$ can be chosen freely, it influences the performance of the equalizing circuit **508** (i.e., MMSE equalizer). Indeed, a joint equalization approach can also be used that involves solving a system of $(T-p) \cdot M$ equations involving $q \cdot K$ unknown scalar variables in the form of $a_1 \ldots a_K$. Thus, it may be advantageous to impose $q \cdot K \leq (T - p) \cdot M$ in order to ensure an adequate performance of the equalizing circuit **508** (or the MMSE equalizer).

Similarly, the dictionary of linear precoders (i.e., $\left\{ U_1, \ldots, U_{2^{B'_p}} \right\}$) shall be chosen in order to minimize the overlap between the linear subspaces spanned by $K$ elements randomly selected from the dictionary of linear precoders (i.e., $\left\{ U_1, \ldots, U_{2^{B'_p}} \right\}$), in order to ensure that the equalizing circuit **508** (or the MMSE equalizer) generates a reliable output.

FIG. 9 is another illustration of a receiving device, in accordance with another embodiment of the present disclosure. FIG. 9 is described in conjunction with elements from FIGs. 1, 2A, 2B, 2C, 3, 4, 5, 6, 7, and 8. With reference to FIG. 9, there is shown an illustration **900** of the receiving device **104** (of FIG. 1) that includes the separation circuit **506,** and the equalizing circuit **508** and the plurality of decoders **520** of the decoding circuit **510.**

The illustration **900** of the receiving device **104** is an alternative version of the illustration **600** of the receiving device **104** (of FIG. 6). Moreover, the illustration **900** of the receiving device **104** may be used in correspondence with the transmitting device **202** (of FIG. 2C). In the illustration **900** of the receiving device **104,** the separation circuit **506** (or the TBM receiver) and the equalizing circuit **508** (or the coherent receiver) do no perform the binary decoding. Moreover, each of the separation circuit **506** (or the TBM receiver) and the equalizing circuit **508** (or the coherent receiver) provides the output in form of "soft information" under the form of vectors of LLR (may also be represented as $l_{1,k}$, and $l_{2,k}$ of respective size $B'_p$ and $B'_q$ bits). The soft information is then concatenated for each transmitting device and taken as input to each of the plurality of decoders **520** (e.g., a binary decoder) of the decoding circuit **510,** which is configured to perform the message decoding outputting the estimated messages.

In accordance with an embodiment, the decoding circuit **510** comprises the plurality of decoders **520,** each configured to receive one of the first estimated symbol vectors and one of the second estimated symbol vectors, concatenate the received first and second estimated symbol vectors into a concatenated estimated symbol vector, and decode the concatenated estimated symbol vector to generate a plurality of decoded messages, each decoded message comprising a first sequence of bits and a second sequence of bits, the first sequence of bits corresponding to a first part of data associated with a corresponding transmitting device amongst the plurality of transmitting devices **102,** and the second sequence of bits corresponding to a second part of data associated with the corresponding transmitting device. Alternatively stated, each of the plurality of decoders **520** of the decoding circuit **510** is configured to receive the soft information in terms of one of the first estimated symbol vectors (i.e., $l_{1,1}, \ldots, l_{1,k}, \ldots, l_{1,K}$) and one of the second estimated symbol vectors (i.e., $l_{2,1}, \ldots, l_{2,k}, \ldots, l_{2,K}$). Thereafter, each of the plurality of decoders **520** is configured to concatenate the received first and second estimated symbol vectors into the concatenated estimated symbol vector, and decode the concatenated estimated symbol vector to generate the plurality of decoded messages (i.e., $\hat{m}_1, \ldots, \hat{m}_k, \ldots, \hat{m}_K$). Each decoded message comprises the first sequence of bits (i.e., $\hat{b}_{1,1}, \ldots, \hat{b}_{B,1}$) and the second sequence of bits (i.e., $\hat{b}_{1,2}, \ldots, b_{B,2}$), the first sequence of bits corresponds to the first part of data associated with the corresponding transmitting device (e.g., the first transmitting device **102A**) amongst the plurality of transmitting devices **102,** and the second sequence of bits corresponds to the second part of data associated with the corresponding transmitting device (e.g., the first transmitting device **102A**) amongst the plurality of transmitting devices **102.**

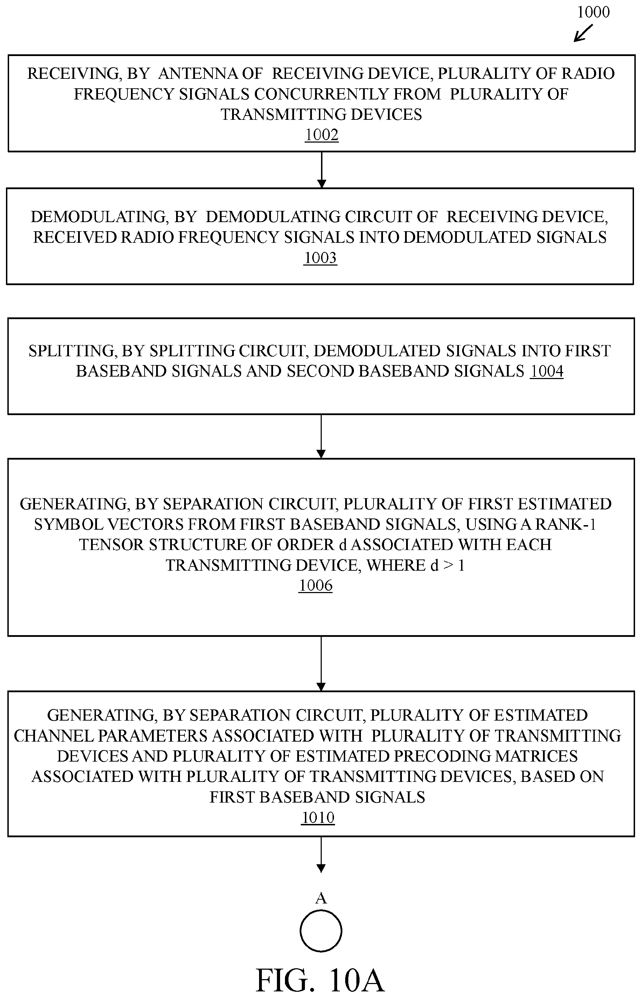

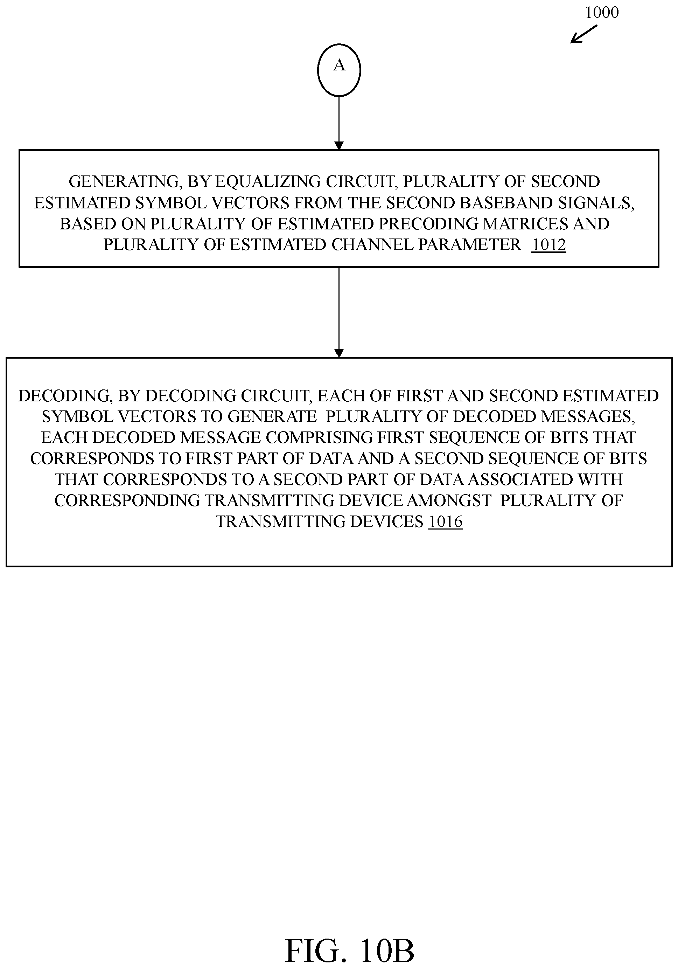

FIGs. 10A and 10B collectively is a flowchart of a method for random access communication, in accordance with an embodiment of the present disclosure. With reference to FIGs. 10A and 10B, there is shown a method **1000** for random access communication. The method **1000** includes steps **1002** to **1018** (steps **1002-1010** of the method **1000** are shown in FIG. 10A and steps **1012-1018** are shown in FIG. 10B). The method **1000** is executed by the receiving device **104** (of FIG. 1).

The method **1000** is provided for random-access communication in which a random number of the plurality of transmitting devices **102** (or the transmitting device **202**) may be active randomly and may be configured to transmit a plurality of radio frequency signals concurrently to the receiving device **104** without any prior resource request (or grant). Moreover, the method **1000** is applicable in two implementation scenarios, first is where there is a block fading channel between each of the plurality of transmitting devices **102** (or the transmitting device **202**) and the receiving device **104,** and second is where there is not a block fading channel between each of the plurality of transmitting devices **102** (or the transmitting device **202**) and the receiving device **104.** In the first implementation scenario, each of the plurality of transmitting devices **102** (or the transmitting device **202**) and the receiving device **104** are in perfect synchronization with each other and hence, no timing and carrier frequency offsets occur in a system (e.g., the system **100,** of FIG. 1). In the second implementation scenario, each of the plurality of transmitting devices **102** (or the transmitting device **202**) and the receiving device **104** are not in perfect synchronization with each other and hence, timing and carrier frequency offsets incur during transmission from each of the plurality of transmitting devices **102** (or the transmitting device **202**) to the receiving device **104** and required to be compensated at the receiving device **104.** By executing the method **1000,** the receiving device **104** gets to know that how many transmitting devices are active at the transmitting side as well as estimate the respective channels of the active transmitting devices.

At step **1002,** the method **1000** comprises receiving, by an antenna (e.g., the antenna **502**) of a receiving device (e.g., the receiving device **104**), a plurality of radio frequency signals concurrently from a plurality of transmitting devices (e.g., the plurality of transmitting devices **102**). In a massive random-access scenario, the antenna **502** of the receiving device **104** is configured to receive the plurality of radio frequency signals concurrently from the plurality of transmitting devices **102** (of FIG. 1), over $M$ antennas and $T$ channel accesses.

At step **1003,** the method **1000** comprises demodulating, by a demodulation circuit (e.g., the demodulation circuit **503**) of a receiving device (e.g., the receiving device **104**), the received radio frequency signals into demodulated signals.

At step **1004,** the method **1000** further comprises splitting, by a splitting circuit (e.g., the splitting circuit **504**) of a receiving device (e.g., the receiving device **104**), the demodulated signals into first baseband signals and second basebandsignals. In case of the perfect synchronization between each of the plurality of transmitting devices **102** and the receiving device **104,** the splitting circuit **504** of the receiving device **104** is configured to split the plurality of demodulated signals into the first basebandsignals and the second basebandsignals.

At step **1006,** the method **1000** further comprises generating, by a separation circuit (e.g., the separation circuit **506**) of a receiving device (e.g., the receiving device **104**), a plurality of first estimated symbol vectors from the first baseband signals, using a rank-1 tensor structure of order d associated with each transmitting device, where d > 1. The separation circuit **506** is configured to generate the plurality of first estimated symbol vectors from the first baseband signals which are transmitted over $p$ grid resource elements. Furthermore, the separation circuit **506** is configured to separate the plurality of first estimated symbol vectors using the rank-1 tensor structure of order d (e.g., a canonical polyadic decomposition) associated with each transmitting device, where d > 1, this may also be referred to as a tensor decomposition.

At step **1010,** the method **1000** further comprises generating, by the separation circuit **506,** a plurality of estimated channel parameters associated with the plurality of transmitting devices **102** and a plurality of estimated precoding matrices associated with the plurality of transmitting devices **102,** based on the first baseband signals. The separation circuit **506** is further configured to generate the plurality of estimated channel parameters associated with the plurality of transmitting devices **102** and the plurality of estimated precoding matrices associated with the plurality of transmitting devices **102,** based on the first baseband signals, described earlier in detail, for example, in FIGs. 6, 7, 8 and 9.

At step **1012,** the method **1000** further comprises estimating, by an equalizing circuit (e.g., the equalizing circuit **508**), a plurality of second estimated symbol vectors from the second baseband signals, which are transmitted over the resource elements occupied by the coherent modulation, based on the plurality of estimated precoding matrices and the plurality of estimated channel parameters. The equalizing circuit **508** is further configured to separate the plurality of second estimated symbol vectors, based on the plurality of estimated precoding matrices and the plurality of estimated channel parameters computed by using the first radio frequency signals, described earlier in detail, for example, in FIG. 8.

At step **1016,** the method **1000** further comprises decoding, by a decoding circuit (e.g., the decoding circuit **510**), each of the first and second estimated symbol vectors to generate a plurality of decoded messages, each decoded message comprising a first sequence of bits that corresponds to a first part of data and a second sequence of bits that corresponds to a second part of data associated with a corresponding transmitting device amongst the plurality of transmitting devices **102.** The decoding circuit **510** is configured to decode each of the first and second estimated symbol vectors to generate the plurality of decoded messages. Each decoded message comprising a first sequence of bits that corresponds to a first part of data and a second sequence of bits that corresponds to a second part of data associated with a corresponding transmitting device amongst the plurality of transmitting devices **102.**

In accordance with an embodiment, decoding, by the decoding circuit **510,** comprises decoding, by each first decoder of a plurality of first decoders (e.g., the plurality of first decoders **516**) of the decoding circuit **510,** one of the first estimated symbol vectors to generate a plurality of first decoded messages, each first decoded messages comprising a first sequence of bits corresponding to a first part of data associated with a corresponding transmitting device amongst the plurality of transmitting devices **102.** After processing the received first radio frequency signals into the plurality of first estimated symbol vectors, the plurality of first decoders **516** (or single-user decoders) of the decoding circuit **510** is configured to decode one of the first estimated symbol vectors to generate the plurality of first decoded messages. Each of the plurality of first decoded messages comprises the first sequence of bits corresponding to the first part of data associated with the corresponding transmitting device amongst the plurality of transmitting devices **102,** described earlier in detail, for example, in FIG. 7.

The method **1000** further comprises decoding, by each second decoder of a plurality of second decoders (e.g., the plurality of second decoders **518**) of the decoding circuit **510,** one of the second estimated symbol vectors generated by the equalization circuit **508** to generate a plurality of second decoded messages, each of the second decoded messages comprising a second sequence of bits that corresponds to a second part of data associated with a corresponding transmitting device amongst the plurality of transmitting devices **102**. After processing the received second radio frequency signals into the plurality of second estimated symbol vectors, the plurality of second decoders **518** (or single-user decoders) of the decoding circuit **510** is configured to decode one of the second estimated symbol vectors to generate the plurality of second decoded messages. Each of the plurality of second decoded messages comprises the second sequence of bits corresponding to the second part of data associated with the corresponding transmitting device amongst the plurality of transmitting devices **102,** described earlier in detail, for example, in FIG. 8.

In accordance with an embodiment, decoding, by the decoding circuit **510,** comprises receiving, by each decoder of a plurality of decoders (e.g., the plurality of decoders **520**) of the decoding circuit **510,** one of the first estimated symbol vectors and one of the second estimated symbol vectors, concatenating, by each decoder, the received first and second estimated symbol vectors into a concatenated estimated symbol vector, and decoding, by each decoder, the concatenated estimated symbol vector to generate a plurality of decoded messages, each decoded message comprising a first sequence of bits and a second sequence of bits, the first sequence of bits corresponding to a first part of data associated with a corresponding transmitting device amongst the plurality of transmitting devices **102,** and the second sequence of bits corresponding to a second part of data associated with the corresponding transmitting device. Alternatively stated, each of the plurality of decoders **520** of the decoding circuit **510** is configured to receive the soft information in terms of one of the first estimated symbol vectors and one of the second estimated symbol vectors. Thereafter, each of the plurality of decoders **520** is configured to concatenate the received first and second estimated symbol vectors into the concatenated estimated symbol vector, and decode the concatenated estimated symbol vector to generate the plurality of decoded messages. Each decoded message comprises the first sequence of bits and the second sequence of bits, the first sequence of bits corresponds to the first part of data associated with the corresponding transmitting device (e.g., the first transmitting device **102A)** amongst the plurality of transmitting devices **102,** and the second sequence of bits corresponds to the second part of data associated with the corresponding transmitting device (e.g., the first transmitting device **102A)** amongst the plurality of transmitting devices **102,** described earlier in detail, for example, in FIG. 9.

In accordance with an embodiment, the method **1000** further comprises applying, by the splitting circuit **504,** a predefined permutation matrix to the demodulated signals to generate the first baseband signals and the second baseband signals. In case of imperfect synchronization between each of the plurality of transmitting devices **102** (or the transmitting device **202**) and the receiving device **104,** the splitting circuit **504** is further configured to apply a predefined permutation matrix to the demodulated signals to generate the first baseband signals and the second baseband signals. The predefined permutation matrix corresponds to reverting the effect of the predefined permutation matrix used at the transmitting device **202** by applying the predefined permutation matrix to each of the first radio frequency signals at the receiving device **104.** After applying the predefined permutation matrix to each of the first and second baseband signals, the plurality of first and second estimated symbol vectors is generated at the receiving device **104.**

In accordance with an embodiment, the method **1000** further comprises estimating, by the separation circuit **506,** a time offset and a frequency offset in each of the first estimated symbol vectors to generate a plurality of time offsets and a plurality of frequency offsets, and applying, by the separation circuit **506,** a time offset compensation, based on the corresponding time offset, and a frequency offset compensation, based on the corresponding frequency offset, to the corresponding estimated symbol vector. In a case, when there is no block fading channel between each of the plurality of transmitting devices **102** (or the transmitting device **202**) and the receiving device **104,** timing and carrier frequency offsets occur at each of the plurality of transmitting devices **102** and required to be compensated at the receiving device **104.** Therefore, the separation circuit **506** is further configured to estimate as well as compensate the timing and carrier frequency offsets at the receiving device **104.**

Further, the method **1000** comprises generating, by the equalizing circuit **508,**each of the second estimated symbol vectors based on the plurality of time offsets, the plurality of frequency offsets, the plurality of estimated precoding matrices and the plurality of estimated channel parameters.

The steps **1002** to **1018** are only illustrative and other alternatives can also be provided where one or more steps are added, one or more steps are removed, or one or more steps are provided in a different sequence without departing from the scope of the claims herein.

In one aspect, a computer program product is provided performing the method **1000** when executed by one or more processors (e.g., the processor **512** of the receiving device **104**) in a computer system. In another aspect, a computer system is provided comprising one or more processors (e.g., the processor **512**) and one or more memories (e.g., the memory **514**), the one or more memories (i.e., the memory **514**) storing program instructions which, when executed by the one or more processors (i.e., the processor **512**), cause the one or more processors (i.e., the processor **512**) to execute the method **1000.**

In another aspect, a processor is provided comprising the various circuits configured to execute the method **1000,** such as the demodulation circuit **503,** the splitting circuit **504,** the separation circuit **506,** the equalizing circuit **508,** and the decoding circuit **510.**

In yet another aspect, the present disclosure provides a non-transitory computer-readable medium having stored thereon, computer-implemented instructions that, when executed by a computer, causes the computer to execute operations of the method **1000.**

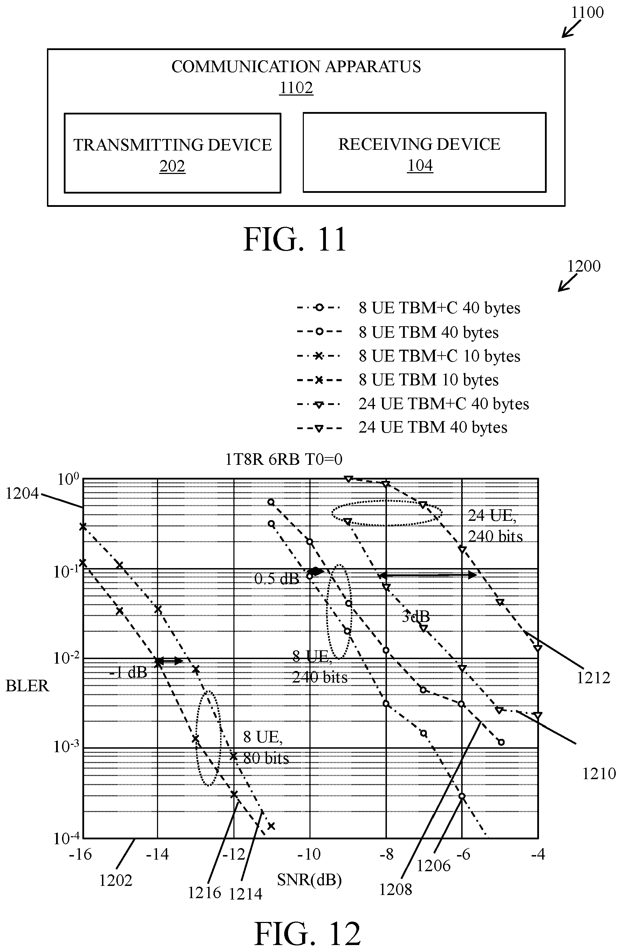

FIG. 11 is a block diagram that illustrates various exemplary components of a communication apparatus, in accordance with an embodiment of the present disclosure. FIG. 11 is described in conjunction with elements from FIGs. 1, 2A, 2B, 2C, 4, 5, 6, 7, 8, 9, 10A and 10B. With reference to FIG. 11, there is shown a block diagram **1100** of a communication apparatus **1102** that includes the transmitting device **202** (of FIG. 2A) and the receiving device **104** (of FIG. 1). In another embodiment, the communication apparatus **1102** may include the plurality of transmitting devices **102** and the receiving device **104.**

The communication apparatus **1102** comprising the transmitting device **202** and the receiving device **104** manifests a reduced probability of decoding error rate, an improved communication reliability and spectral efficiency. Moreover, the communication apparatus **1102** may be used in the massive random-access scenario with the improved communication reliability and spectral efficiency. Examples of the communication apparatus **1102** may include, but are not limited to, a transceiver, a base station, a user equipment, and the like. The communication apparatus **1102** comprising the transmitting device **202** (or the plurality of transmitting devices **102**) and the receiving device **104** can be used in Internet-of-Things (IoT), massive random-access scenario, uplink multi-input-multi-output (MIMO) random access with the plurality of transmitting devices **102,** and the like.

FIG. 12 is a graphical representation that illustrates variation of block error rate (BLER) with respect to signal-to-noise ratio (SNR) for a mixed tensor-based modulation and coherent modulation and a typical tensor-based modulation in case of large payloads, in accordance with an embodiment of the present disclosure. FIG. 12 is described in conjunction with elements from FIGs. 1, 2A, 2B, 2C, 3, 4, 5, 6, 7, 8, 9, 10A-10B, and 11. With reference to FIG. 12, there is shown a graphical representation **1200** with an X-axis **1202** that represents the SNR in decibel (dB) and a Y-axis **1204** that represents BLER.

The graphical representation **1200** illustrates the variation of BLER with respect to SNR in an ideal case where no timing and carrier frequency offsets are present. In an implementation, the graphical representation **1200** can be obtained by considering a packet size of either 10 bytes or 40 bytes, 8.24 active user equipments (UEs) or transmitting devices, two hundred and forty potential user equipments (UEs), a carrier frequency of 700MHz, a bandwidth of 6 resource blocks (RBs), polar code for channel coding, 8 base station antennas, one UE antenna, channel model of TDL-A 30ns and 3Km/h, and with a numerology of SCS 15kHz and 14 operating systems (OS). Moreover, the number of channel uses (i.e., T), p and q are 1008, 252, 756 or 378, respectively.

In the graphical representation **1200,** there is shown a first line **1206** and a second line **1208.** Each of the first line **1206** and the second line **1208** represents variation of BLER with respect to SNR that is obtained when eight user equipments (UEs) are transmitting a payload of 240 bits over a tensor-based modulation (TBM) along with the coherent modulation (may also be referred to as TBM+C) and the typical TBM, respectively. Moreover, the first line **1206** achieves a gain of 0.5 dB over the second line **1208.** Alternatively stated, the TBM along with the coherent modulation (i.e., the TBM+C) represented by the first line **1206** achieves the gain of 0.5 dB over the typical TBM represented by the second line **1208.** There is further shown a third line **1210** and a fourth line **1212.** Each of the third line **1210** and the fourth line **1212** represents variation of BLER with respect to SNR that is obtained when twenty-four user equipments (UEs) are transmitting a payload of 240 bits over the TBM along with the coherent modulation (i.e., the TBM+C) and the typical TBM, respectively. Moreover, the third line **1210** achieves a gain of 3 dB over the fourth line **1212.** Alternatively stated, the TBM along with the coherent modulation (i.e., the TBM+C) represented by the third line **1210** achieves the gain of 3 dB over the typical TBM represented by the fourth line **1212.** There is further shown a fifth line **1214** and a sixth line **1216.** Each of the fifth line **1214** and the sixth line **1216** represents variation of BLER with respect to SNR that is obtained when eight user equipments (UEs) are transmitting a payload of 80 bits over the TBM along with the coherent modulation (i.e., the TBM+C) and the typical TBM, respectively. Moreover, the fifth line **1214** achieves a loss of -1 dB over the sixth line **1216.** Alternatively stated, the TBM along with the coherent modulation (i.e., the TBM+C) represented by the fifth line **1214** achieves the loss of -1 dB over the typical TBM represented by the sixth line **1216.** In this way, it can be stated that the TBM along with the coherent modulation (i.e., the TBM+C) is preferred over the typical TBM when it is required to transmit large payloads and with large number of users.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

**Claims**

1. A transmitting device (202) for random access communication, comprising:

   an encoding circuit (204) configured to:

      encode an input message into a first sequence of bits and a second sequence of bits,
      split the first sequence of bits into d blocks of bits, where d > 1, and
      determine d vectors, based on the d blocks of bits;

   a first mapping circuit (206) configured to construct a first symbol vector by computing a Kronecker product of the d vectors to generate a rank-1 tensor structure of order d;
   a second mapping circuit (208) configured to:

      map the second sequence of bits to a vector of baseband symbols, and
      apply an allocation matrix to the vector of baseband symbols to generate a second symbol vector,
      wherein the allocation matrix is a precoding matrix based on the first sequence of bits;

   a concatenation circuit (210) configured to concatenate the first symbol vector and the second symbol vector into a baseband symbol vector;
   a modulation circuit (211) configured to modulate the baseband symbol vector to generate a modulated symbol vector comprising modulated symbols; and
   at least one antenna (212) configured to transmit each modulated symbol of the modulated symbol vector in a radio frequency signal to a receiving device.

2. The transmitting device (202) according to claim 1, wherein the encoding circuit (204) is configured to:

   split the input message into a first message and a second message,
   encode the first message into the first sequence of bits, and
   encode the second message into the second sequence of bits.

3. The transmitting device (202) according to claim 1, wherein the encoding circuit (204) is configured to encode the input message into a main sequence of bits, and split the main sequence of bits into the first sequence of bits and the second sequence of bits.

4. The transmitting device (202) according to any of claims 1 to 3, wherein the encoding circuit (204) is configured to use a binary code for encoding messages.

5. The transmitting device (202) according to any of claims 1 to 4, wherein the encoding circuit (204) is configured to select the precoding matrix from a fixed dictionary comprising matrices, wherein each of the matrices of the fixed dictionary is equal to one of a same unitary matrix, a same unitary matrix multiplied by a same permutation matrix, a same unitary matrix multiplied by a truncated permutation matrix from a set of non-disjoint truncated permutation matrices, a matrix from a set of matrices corresponding to subspaces of a Grassmannian space, or a matrix from a set of truncated unitary matrices.

6. A receiving device (104) for random access communication, comprising:

   at least one antenna (502) configured to receive a plurality of radio frequency signals concurrently from a plurality of transmitting devices (102);
   a demodulation circuit (503) configured to demodulate the received radio frequency signals into demodulated signals;

a splitting circuit (504) configured to split the demodulated signals into first baseband signals and second baseband signals;

a separation circuit (506) configured to:

generate a plurality of first estimated symbol vectors from the first baseband signals, each of the first estimated symbol vectors being a rank-1 tensor structure of order d associated with each transmitting device, where d > 1;

generate a plurality of estimated channel parameters associated with the plurality of transmitting devices (102) based on the first baseband signals;

a precoder selection circuit (704) configured to: generate a plurality of estimated precoding matrices associated with the plurality of transmitting devices (102), using the plurality of first estimated symbol vectors;

an equalizing circuit (508) configured to:

generate a plurality of second estimated symbol vectors from the second baseband signals, based on the plurality of estimated precoding matrices and the plurality of estimated channel parameters; and a decoding circuit (510) configured to:

decode each of the first and second estimated symbol vectors to generate a plurality of decoded messages, each decoded message comprising a first sequence of bits that corresponds to a first part of data and a second sequence of bits that corresponds to a second part of data associated with a corresponding transmitting device amongst the plurality of transmitting devices (102).

7. The receiving device (104) according to claim 6, wherein the decoding circuit (510) comprises:

a plurality of first decoders (516) each configured to decode one of the first estimated symbol vectors generated by the separation circuit (506) to generate a plurality of first decoded messages, each first decoded message comprising a first sequence of bits corresponding to a first part of data associated with a corresponding transmitting device amongst the plurality of transmitting devices (102); and

a plurality of second decoders (518) each configured to decode one of the second estimated symbol vectors generated by the equalization circuit (508) to generate a plurality of second decoded messages, each of the second decoded messages comprising a second sequence of bits corresponding to a second part of data associated with a corresponding transmitting device amongst the plurality of transmitting devices (102).

8. The receiving device (104) according to claim 6, wherein the decoding circuit (510) comprises a plurality of decoders (520) each configured to:

receive one of the first estimated symbol vectors and one of the second estimated symbol vectors,

concatenate the received first and second estimated symbol vectors into a concatenated estimated symbol vector, and

decode the concatenated estimated symbol vector to generate a plurality of decoded messages.

9. The receiving device (104) according to any of claims 6 to 8, wherein the splitting circuit (504) is further configured to apply a predefined permutation matrix to the demodulated signals to generate the first baseband signals and the second baseband signals.

10. The receiving device (104) according to any of claims 6 to 9,

wherein the separation circuit (506) is further configured to:

estimate a time offset and a frequency offset in each of the first estimated symbol vectors to generate a plurality of time offsets and a plurality of frequency offsets, and

apply a time offset compensation, based on the corresponding time offset, and a frequency offset compensation, based on the corresponding frequency offset, to the corresponding first estimated symbol vector,

and wherein the equalizing circuit (508) is further configured to generate each of the second estimated symbol vectors based on the plurality of time offsets, the plurality of frequency offsets, the plurality of estimated precoding matrices and the plurality of estimated channel parameters.

11. A method (400) for random access communication, comprising:

acquiring, by an encoding circuit (204) of a transmitting device (202), an input message;

encoding, by the encoding circuit (204), the input message into a first sequence of bits and a second sequence of bits;

splitting, by the encoding circuit (204), the first sequence of bits in d blocks of bits, where d > 1;

determining, by the encoding circuit (204), d vectors based on the d blocks of bits;

constructing a first symbol vector, by a first mapping circuit (206) of the transmitting device (202), by computing a Kronecker product of the d vectors to generate a rank-1 tensor structure of order d;

mapping, by a second mapping circuit (208) of the transmitting device (202), the second sequence of bits to a vector of baseband symbols;

applying, by the second mapping circuit (208), an allocation matrix to the vector of baseband symbols to generate a second symbol vector, wherein the allocation matrix is a precoding matrix based on the first sequence of bits;

concatenating, by a concatenation circuit (210) of the transmitting device (202), the first symbol vector and the second symbol vector into a baseband symbol vector;

modulating, by a modulation circuit (211) of the transmitting device (202), the baseband symbol vector to generate a modulated symbol vector comprising modulated symbols; and

transmitting, by at least one antenna (212) of the transmitting device (202), each modulated symbol of the modulated symbol vector in a radio frequency signal to a receiving device (104).

**12.** The method (400) according to claim 11, wherein encoding, by the encoding circuit (204), comprises:

splitting the input message into a first message and a second message,

encoding the first message into the first sequence of bits, and

encoding the second message into the second sequence of bits.

**13.** A method (1000) for random access communication, comprising:

receiving, by at least one antenna (502) of a receiving device (104), a plurality of radio frequency signals concurrently from a plurality of transmitting devices (102);

demodulating, by a demodulation circuit (503) of the receiving device (104), the received radio frequency signals into demodulated signals;

splitting, by a splitting circuit (504) of the receiving device (104), the demodulated signals into first baseband signals and second baseband signals;

generating, by a separation circuit (506) of the receiving device (104), a plurality of first estimated symbol vectors from the first baseband signals, each of the first estimated symbol vectors being a rank-1 tensor structure of order d associated with each transmitting device, where d > 1;

generating, by the separation circuit (506), a plurality of estimated channel parameters associated with the plurality of transmitting devices (102) based on the first baseband signals, and generating, by a precoder selection circuit (704), a plurality of estimated precoding matrices associated with the plurality of transmitting devices (102), using the plurality of first estimated symbol vectors;

generating, by an equalizing circuit (508) of the receiving device (104), a plurality of second estimated symbol vectors from the second baseband signals, based on the plurality of estimated precoding matrices and the plurality of estimated channel parameters;

decoding, by a decoding circuit (510) of the receiving device (104), each of the first and second estimated symbol vectors to generate a plurality of decoded messages, each decoded message comprising a first sequence of bits that corresponds to a first part of data and a second sequence of bits that corresponds to a second part of data associated with a corresponding transmitting device amongst the plurality of transmitting devices (102).

**14.** The method (1000) according to claim 13, wherein decoding, by the decoding circuit (510), comprises:

decoding, by each first decoder of a plurality of first decoders (516) of the decoding circuit (510), one of the first estimated symbol vectors to generate a plurality of first decoded messages, each first decoded messages comprising a first sequence of bits corresponding to a first part of data associated with a corresponding transmitting device amongst the plurality of transmitting devices (102); and

decoding, by each second decoder of a plurality of second decoders (518) of the decoding circuit (510), one of the second estimated symbol vectors generated by the equalization circuit (508) to generate a plurality of second decoded messages, each of the second decoded messages comprising a second sequence of bits that corresponds to a second part of data associated with a corresponding transmitting device amongst the plurality of transmitting devices (102).

15. A computer program product comprising program instructions for performing the method (400) according to any of claims 11 to 12 and/or the method (1000) according to any of claims 13 to 14, when executed by one or more processors in a computer system.

**Patentansprüche**

1. Sendevorrichtung (202) für Direktzugriffskommunikation, umfassend:
   eine Codierungsschaltung (204), die für Folgendes konfiguriert ist:

   Codieren einer Eingangsnachricht in eine erste Sequenz von Bits und eine zweite Sequenz von Bits,
   Teilen der ersten Sequenz von Bits in d Blöcke von Bits, wobei d > 1 ist, und
   Bestimmen von d Vektoren, basierend auf den d Bitblöcken;
   eine erste Zuordnungsschaltung (206), die konfiguriert ist, um einen ersten Symbolvektor zu konstruieren, indem ein Kronecker-Produkt der d Vektoren berechnet wird, um eine Rang-1-Tensorstruktur der Ordnung d zu erzeugen;
   eine zweite Zuordnungsschaltung (208), die für Folgendes konfiguriert ist:

   Zuordnen der zweiten Sequenz von Bits zu einem Vektor von Basisbandsymbolen, und
   Anwenden einer Zuordnungsmatrix auf den Vektor der Basisbandsymbole, um einen zweiten Symbolvektor zu erzeugen, wobei die Zuweisungsmatrix eine Vorcodierungsmatrix basierend auf der ersten Sequenz von Bits ist;
   eine Verkettungsschaltung (210), die konfiguriert ist, um den ersten Symbolvektor und den zweiten Symbolvektor zu einem Basisband-Symbolvektor zu verketten;
   eine Modulationsschaltung (211), die konfiguriert ist, um den Basisband-Symbolvektor zu modulieren, um einen modulierten Symbolvektor zu erzeugen, der modulierte Symbole umfasst; und
   mindestens eine Antenne (212), die konfiguriert, um jedes modulierte Symbol des modulierten Symbolvektors in einem Hochfrequenzsignal an eine Empfangsvorrichtung zu senden.

2. Sendevorrichtung (202) nach Anspruch 1, wobei die Codierungsschaltung (204) für Folgendes konfiguriert ist:

   Teilen der Eingangsnachricht in eine erste Nachricht und eine zweite Nachricht,
   Codieren der ersten Nachricht in die erste Sequenz von Bits, und Codieren der zweiten Nachricht in die zweite Sequenz von Bits.

3. Sendevorrichtung (202) nach Anspruch 1, wobei die Codierungsschaltung (204) konfiguriert ist, um die Eingangsnachricht in eine Hauptsequenz von Bits zu codieren und die Hauptsequenz von Bits in die erste Sequenz von Bits und die zweite Sequenz von Bits zu teilen.

4. Sendevorrichtung (202) nach einem der Ansprüche 1 bis 3, wobei die Codierungsschaltung (204) konfiguriert ist, um einen Binärcode zum Codieren von Nachrichten zu verwenden.

5. Sendevorrichtung (202) nach einem der Ansprüche 1 bis 4, wobei die Codierungsschaltung (204) konfiguriert ist, um die Vorcodierungsmatrix aus einem festen Wörterbuch, das Matrizen umfasst, auszuwählen, wobei jede der Matrizen des festen Wörterbuchs gleich einer von einer gleichen Einheitsmatrix, einer gleichen Einheitsmatrix, die mit einer gleichen Permutationsmatrix multipliziert ist, einer gleichen Einheitsmatrix, die mit einer verkürzten Permutationsmatrix aus einem Satz von nicht disjunkten verkürzten Permutationsmatrizen multipliziert ist, einer Matrix aus einem Satz von Matrizen, die Unterräumen eines Grassmannschen Raumes entsprechen, oder einer Matrix aus einem Satz von verkürzten Einheitsmatrizen, ist.

6. Empfangsvorrichtung (104) für Direktzugriffskommunikation, umfassend:

   mindestens eine Antenne (502), die dazu konfiguriert ist, gleichzeitig eine Vielzahl von Hochfrequenzsignalen aus einer Vielzahl von Sendevorrichtungen (102) zu empfangen;
   eine Demodulationsschaltung (503), die konfiguriert ist, um die empfangenen Hochfrequenzsignale in demodulierte Signale zu demodulieren;
   eine Teilungsschaltung (504), die konfiguriert ist, um die demodulierten Signale in erste Basisbandsignale und zweite Basisbandsignale zu teilen;

eine Trennschaltung (506), die für Folgendes konfiguriert ist:

Erzeugen einer Vielzahl erster geschätzter Symbolvektoren aus den ersten Basisbandsignalen, wobei jeder der ersten geschätzten Symbolvektoren eine Rang-1-Tensorstruktur der Ordnung d ist, die mit jeder Sendevorrichtung assoziiert ist, wobei d > 1 ist;

Erzeugen einer Vielzahl von geschätzten Kanalparametern, die mit der Vielzahl von Sendevorrichtungen (102) assoziiert ist, basierend auf den ersten Basisbandsignalen;

eine Vorcodierer-Auswahlschaltung (704), die für Folgendes konfiguriert ist: Erzeugen einer Vielzahl von geschätzten Vorcodierungsmatrizen, die mit der Vielzahl von Sendevorrichtungen (102) assoziiert ist, unter Verwendung der Vielzahl von ersten geschätzten Symbolvektoren;

eine Ausgleichsschaltung (508), die für Folgendes konfiguriert ist:

Erzeugen einer Vielzahl von zweiten geschätzten Symbolvektoren aus den zweiten Basisbandsignalen, basierend auf der Vielzahl von geschätzten Vorcodierungsmatrizen und der Vielzahl von geschätzten Kanalparametern; und

eine Decodierungsschaltung (510), die für Folgendes konfiguriert ist:

Decodieren jedes des ersten und zweiten geschätzten Symbolvektors, um eine Vielzahl von decodierten Nachrichten zu erzeugen, wobei jede decodierte Nachricht eine erste Sequenz von Bits umfasst, die einem ersten Teil von Daten entspricht, und eine zweite Sequenz von Bits, die einem zweiten Teil von Daten entspricht, der mit einer entsprechenden Sendevorrichtung unter der Vielzahl von Sendevorrichtungen (102) assoziiert ist.

7. Empfangsvorrichtung (104) nach Anspruch 6, wobei die Decodierungsschaltung (510) Folgendes umfasst:

eine Vielzahl von ersten Decodierern (516), die jeweils konfiguriert sind, um einen der ersten geschätzten Symbolvektoren zu decodieren, die von der Trennschaltung (506) erzeugt wurden, um eine Vielzahl von ersten decodierten Nachrichten zu umfassen, wobei jede erste decodierte Nachricht eine erste Sequenz von Bits umfasst, die einem ersten Teil von Daten entspricht, der mit einer entsprechenden Sendevorrichtung unter der Vielzahl von Sendevorrichtungen (102) assoziiert ist; und

eine Vielzahl von zweiten Decodierern (518), die jeweils konfiguriert sind, um einen der zweiten geschätzten Symbolvektoren zu decodieren, die von der Ausgleichsschaltung (508) erzeugt wurden, um eine Vielzahl von zweiten decodierten Nachrichten zu umfassen, wobei jede der zweiten decodierten Nachrichten eine zweite Sequenz von Bits umfasst, die einem zweiten Teil von Daten entspricht, der mit einer entsprechenden Sendevorrichtung unter der Vielzahl von Sendevorrichtungen (102) assoziiert ist.

8. Empfangsvorrichtung (104) nach Anspruch 6, wobei die Decodierungsschaltung (510) eine Vielzahl von Decodierern (520) umfasst, wobei jeder für Folgendes konfiguriert ist:

Empfangen eines der ersten geschätzten Symbolvektoren und eines der zweiten geschätzten Symbolvektoren, Verketten des empfangenen ersten und zweiten geschätzten Symbolvektors zu einem verketteten geschätzten Symbolvektor, und Decodieren des verketteten geschätzten Symbolvektors, um eine Vielzahl von decodierten Nachrichten zu erzeugen.

9. Empfangsvorrichtung (104) nach einem der Ansprüche 6 bis 8, wobei die Teilungsschaltung (504) ferner konfiguriert ist, um eine vordefinierte Permutationsmatrix auf die demodulierten Signale anzuwenden, um die ersten Basisbandsignale und die zweiten Basisbandsignale zu erzeugen.

10. Empfangsvorrichtung (104) nach einem der Ansprüche 6 bis 9, wobei die Trennschaltung (506) ferner für Folgendes konfiguriert ist:

Schätzen eines Zeitversatzes und eines Frequenzversatzes in jedem der ersten geschätzten Symbolvektoren, um eine Vielzahl von Zeitversätzen und eine Vielzahl von Frequenzversätzen zu erzeugen, und Anwenden einer Kompensation des Zeitversatzes, basierend auf dem entsprechenden Zeitversatz, und einer Kompensation des Frequenzversatzes, basierend auf dem entsprechenden Frequenzversatz, auf den entsprechenden ersten geschätzten Symbolvektor, und wobei die Ausgleichsschaltung (508) ferner konfiguriert ist, um jeden der zweiten geschätzten Symbolvektoren basierend auf der Vielzahl von Zeitversätzen, der Vielzahl von Frequenzversätzen, der Vielzahl von geschätzten Vorcodierungsmatrizen und der Vielzahl von geschätzten Kanalparametern zu erzeugen.

**11.** Verfahren (400) für Direktzugriffskommunikation, umfassend:

Erhalten einer Eingangsnachricht durch eine Codierungsschaltung (204) einer Sendevorrichtung (202);

Codieren der Eingangsnachricht in eine erste Sequenz von Bits und eine zweite Sequenz von Bits durch eine Codierungsschaltung (204);

Teilen der ersten Sequenz von Bits in d Blöcke von Bits, wobei d > 1 ist, durch die Codierungsschaltung (204);

Bestimmen von d Vektoren, basierend auf den d Bitblöcken, durch eine Codierungsschaltung (204);

Konstruieren eines ersten Symbolvektors durch eine erste Zuordnungsschaltung (206) der Sendevorrichtung (202) durch Berechnen eines Kronecker-Produkts der d Vektoren, um eine Rang-1-Tensorstruktur der Ordnung d zu erzeugen;

Zuordnen der zweiten Sequenz von Bits zu einem Vektor von Basisbandsymbolen durch eine zweite Zuordnungsschaltung (208) der Sendevorrichtung (202);

Anwenden einer Zuweisungsmatrix auf den Vektor der Basisbandsymbole durch die zweite Zuordnungsschaltung (208), um einen zweiten Symbolvektor zu erzeugen, wobei die Zuweisungsmatrix eine Vorcodierungsmatrix basierend auf der ersten Sequenz von Bits ist;

Verketten des ersten Symbolvektors und des zweiten Symbolvektors durch eine Verkettungsschaltung (210) der Sendevorrichtung (202) zu einem Basisband-Symbolvektor;

Modulieren des Basisband-Symbolvektors durch eine Modulationsschaltung (211) der Sendevorrichtung (202), um einen modulierten Symbolvektor zu erzeugen, der modulierte Symbole umfasst; und

Senden jedes modulierten Symbols des modulierten Symbolvektors in einem Hochfrequenzsignal durch mindestens eine Antenne (212) der Sendevorrichtung (202) an eine Empfangsvorrichtung (104).

**12.** Verfahren (400) nach Anspruch 11, wobei das Codieren durch die Codierungsschaltung (204) Folgendes umfasst:

Teilen der Eingangsnachricht in eine erste Nachricht und eine zweite Nachricht,

Codieren der ersten Nachricht in die erste Sequenz von Bits, und Codieren der zweiten Nachricht in die zweite Sequenz von Bits.

**13.** Verfahren (1000) für Direktzugriffskommunikation, umfassend:

gleichzeitiges Empfangen einer Vielzahl von Hochfrequenzsignalen von einer Vielzahl von Sendevorrichtungen (102) durch mindestens eine Antenne (502) einer Empfangsvorrichtung (104);

Demodulieren der empfangenen Hochfrequenzsignale in demodulierte Signale durch eine Demodulationsschaltung (503) der Empfangsvorrichtung (104);

Teilen der demodulierten Signale in erste Basisbandsignale und zweite Basisbandsignale durch eine Teilungsschaltung (504) der Empfangsvorrichtung (104);

Erzeugen einer Vielzahl erster geschätzter Symbolvektoren aus den ersten Basisbandsignalen durch eine Trennschaltung (506) der Empfangsvorrichtung (104), wobei jeder der ersten geschätzten Symbolvektoren eine Rang-1-Tensorstruktur der Ordnung d ist, die mit jeder Sendevorrichtung assoziiert ist, wobei d > 1 ist;

Erzeugen einer Vielzahl von geschätzten Kanalparametern, die mit der Vielzahl von Sendevorrichtungen (102) assoziiert ist, basierend auf den ersten Basisbandsignalen, durch die Trennschaltung (506), und Erzeugen einer Vielzahl von geschätzten Vorcodierungsmatrizen, die mit der Vielzahl von Sendevorrichtungen (102) assoziiert ist, unter Verwendung der Vielzahl von ersten geschätzten Symbolvektoren, durch eine Vorcodiererauswahlschaltung (704);

Erzeugen einer Vielzahl von zweiten geschätzten Symbolvektoren aus den zweiten Basisbandsignalen durch eine Ausgleichsschaltung (508) der Empfangsvorrichtung (104), basierend auf der Vielzahl von geschätzten Vorcodierungsmatrizen und der Vielzahl von geschätzten Kanalparametern;

Decodieren jedes des ersten und zweiten geschätzten Symbolvektors durch eine Decodierungsschaltung (510) der Empfangsvorrichtung (104), um eine Vielzahl von decodierten Nachrichten zu erzeugen, wobei jede decodierte Nachricht eine erste Sequenz von Bits umfasst, die einem ersten Teil von Daten entspricht, und eine zweite Sequenz von Bits, die einem zweiten Teil von Daten entspricht, der mit einer entsprechenden Sendevorrichtung unter der Vielzahl von Sendevorrichtungen (102) assoziiert ist.

**14.** Verfahren (1000) nach Anspruch 13, wobei das Decodieren durch die Decodierungsschaltung (510) Folgendes umfasst:

Decodieren, durch jeden ersten Decodierer einer Vielzahl von ersten Decodierern (516) der Decodierungsschaltung (510), eines der ersten geschätzten Symbolvektoren, um eine Vielzahl von ersten decodierten Nachrichten zu erzeugen, wobei jede erste decodierte Nachricht eine erste Sequenz von Bits umfasst, die einem ersten Teil von Daten entspricht, der mit einer entsprechenden sendenden Vorrichtung unter der Vielzahl von Sendevorrichtungen (102) assoziiert ist; und

Decodieren, durch jeden zweiten Decodierer einer Vielzahl von zweiten Decodierern (518) der Decodierungsschaltung (510), eines der von der Ausgleichsschaltung (508) erzeugten zweiten geschätzten Symbolvektoren, um eine Vielzahl von zweiten decodierten Nachrichten zu erzeugen, wobei jede der zweiten decodierten Nachrichten eine zweite Sequenz von Bits umfasst, die einem zweiten Teil von Daten entspricht, der mit einer entsprechenden Sendevorrichtung unter der Vielzahl von Sendevorrichtungen (102) assoziiert ist.

**15.** Computerprogrammprodukt, umfassend Programmanweisungen zum Durchführen des Verfahrens (400) nach einem der Ansprüche 11 bis 12 und/oder des Verfahrens (1000) nach einem der Ansprüche 13 bis 14, wenn es von einem oder mehreren Prozessoren in einem Computersystem ausgeführt wird.

**Revendications**

**1.** Dispositif de transmission (202) pour une communication à accès aléatoire, comprenant :
un circuit de codage (204) configuré pour :

encoder un message d'entrée en une première séquence de bits et une seconde séquence de bits,
diviser la première séquence de bits en d blocs de bits, où d > 1, et
déterminer d vecteurs, en fonction des d blocs de bits ;
un premier circuit de mappage (206) configuré pour construire un premier vecteur de symboles en calculant un produit de Kronecker des d vecteurs pour générer une structure tensorielle de rang 1 d'ordre d ;
un second circuit de mappage (208) configuré pour :

mapper la seconde séquence de bits sur un vecteur de symboles en bande de base, et
appliquer une matrice d'allocation au vecteur de symboles en bande de base pour générer un second vecteur de symboles,
dans lequel la matrice d'allocation est une matrice de précodage basée sur la première séquence de bits ;
un circuit de concaténation (210) configuré pour concaténer le premier vecteur de symboles et le second vecteur de symboles en un vecteur de symboles en bande de base ;
un circuit de modulation (211) configuré pour moduler le vecteur de symboles en bande de base afin de générer un vecteur de symboles modulés comprenant des symboles modulés ; et
au moins une antenne (212) configurée pour transmettre chaque symbole modulé du vecteur de symboles modulés dans un signal radiofréquence à un dispositif de réception.

**2.** Dispositif de transmission (202) selon la revendication 1, dans lequel le circuit d'encodage (204) est configuré pour :

diviser le message d'entrée en un premier message et un second message,
encoder le premier message dans la première séquence de bits, et
encoder le second message dans la seconde séquence de bits.

**3.** Dispositif de transmission (202) selon la revendication 1, dans lequel le circuit d'encodage (204) est configuré pour encoder le message d'entrée en une séquence principale de bits, et diviser la séquence principale de bits en une première séquence de bits et une seconde séquence de bits.

**4.** Dispositif de transmission (202) selon l'une quelconque des revendications 1 à 3, dans lequel le circuit d'encodage (204) est configuré pour utiliser un code binaire pour encoder les messages.

**5.** Dispositif de transmission (202) selon l'une quelconque des revendications 1 à 4, dans lequel le circuit d'encodage (204) est configuré pour sélectionner la matrice de précodage à partir d'un dictionnaire fixe comprenant des matrices, dans lequel chacune des matrices du dictionnaire fixe étant égale à l'une des matrices suivantes : une même matrice unitaire, une même matrice unitaire multipliée par une même matrice de permutation, une même matrice unitaire multipliée par une matrice de permutation tronquée d'un ensemble de matrices de permutation tronquées non disjointes, une matrice d'un ensemble de matrices correspondant à des sous-espaces d'un espace grassmannien, ou une matrice d'un ensemble de matrices unitaires tronquées.

**6.** Dispositif de réception (104) pour une communication à accès aléatoire, comprenant :

au moins une antenne (502) configurée pour recevoir simultanément une pluralité de signaux radiofréquences provenant d'une pluralité de dispositifs de transmission (102) ;

un circuit de démodulation (503) configuré pour démoduler les signaux de radiofréquence reçus en signaux démodulés ;

un circuit de séparation (504) configuré pour séparer les signaux démodulés en signaux de première bande de base et signaux de seconde bande de base ;

un circuit de séparation (506) configuré pour :

générer une pluralité de premiers vecteurs de symboles estimés à partir des premiers signaux de bande de base, chacun des premiers vecteurs de symboles estimés étant une structure tensorielle de rang 1 d'ordre d associée à chaque dispositif de transmission, où d > 1 ;

générer une pluralité de paramètres de canal estimés associés à la pluralité de dispositifs de transmission (102) sur la base des premiers signaux de bande de base ;

un circuit de sélection de précodeur (704) configuré pour :

générer une pluralité de matrices de précodage estimées associées à la pluralité de dispositifs de transmission (102), en utilisant la pluralité de premiers vecteurs de symboles estimés ;

un circuit d'égalisation (508) configuré pour :

générer une pluralité de seconds vecteurs de symboles estimés à partir des seconds signaux en bande de base, sur la base de la pluralité de matrices de précodage estimées et de la pluralité de paramètres de canal estimés ; et

un circuit de décodage (510) configuré pour :

décoder chacun des premier et second vecteurs de symboles estimés pour générer une pluralité de messages décodés, chaque message décodé comprenant une première séquence de bits qui correspond à une première partie de données et une seconde séquence de bits qui correspond à une seconde partie de données associée à un dispositif de transmission correspondant parmi la pluralité de dispositifs de transmission (102).

**7.** Dispositif de réception (104) selon la revendication 6, dans lequel le circuit de décodage (510) comprend :

une pluralité de premiers décodeurs (516) chacun configuré pour décoder l'un des premiers vecteurs de symboles estimés générés par le circuit de séparation (506) afin de générer une pluralité de premiers messages décodés, chaque premier message décodé comprenant une première séquence de bits correspondant à une première partie de données associée à un dispositif de transmission correspondant parmi la pluralité de dispositifs de transmission (102) ; et

une pluralité de seconds décodeurs (518) chacun configuré pour décoder l'un des seconds vecteurs de symboles estimés générés par le circuit d'égalisation (508) afin de générer une pluralité de seconds messages décodés, chacun des seconds messages décodés comprenant une seconde séquence de bits correspondant à une seconde partie de données associée à un dispositif de transmission correspondant parmi la pluralité de dispositifs de transmission (102).

**8.** Dispositif de réception (104) selon la revendication 6, dans lequel le circuit de décodage (510) comprend une pluralité de décodeurs (520) chacun configuré pour :

recevoir l'un des premiers vecteurs de symboles estimés et l'un des seconds vecteurs de symboles estimés, concaténer les premier et second vecteurs de symboles estimés reçus en un vecteur de symboles estimés concaténés, et

décoder le vecteur de symboles estimés concaténés pour générer une pluralité de messages décodés.

**9.** Dispositif de réception (104) selon l'une quelconque des revendications 6 à 8, dans lequel le circuit de division (504) est également configuré pour appliquer une matrice de permutation prédéfinie aux signaux démodulés afin de générer les premiers signaux en bande de base et les seconds signaux en bande de base.

**10.** Dispositif de réception (104) selon l'une quelconque des revendications 6 à 9, dans lequel le circuit de séparation (506) est également configuré pour :

estimer un décalage temporel et un décalage de fréquence dans chacun des premiers vecteurs de symboles estimés afin de générer une pluralité de décalages temporels et une pluralité de décalages de fréquence, et appliquer une compensation de décalage temporel, basée sur le décalage temporel correspondant, et une compensation de décalage de fréquence, basée sur le décalage de fréquence correspondant, au premier vecteur de symbole estimé correspondant,

et dans lequel le circuit d'égalisation (508) est également configuré pour générer chacun des seconds vecteurs de symboles estimés sur la base de la pluralité de décalages temporels, de la pluralité de décalages de fréquence, de la pluralité de matrices de précodage estimées et de la pluralité de paramètres de canal estimés.

**11.** Procédé (400) pour une communication à accès aléatoire, comprenant :

l'acquisition, par un circuit d'encodage (204) d'un dispositif de transmission (202), d'un message d'entrée ;

l'encodage, par le circuit d'encodage (204), du message d'entrée en une première séquence de bits et une seconde séquence de bits ;

la division, par le circuit d'encodage (204), de la première séquence de bits en d blocs de bits, où d > 1 ;

la détermination, par le circuit d'encodage (204), de d vecteurs basés sur les d blocs de bits ;

la construction d'un premier vecteur de symboles, par un premier circuit de mappage (206) du dispositif de transmission (202), en calculant un produit de Kronecker des vecteurs d pour générer une structure de tenseur de rang 1 d'ordre d ;

le mappage, par un second circuit de mappage (208) du dispositif de transmission (202), la seconde séquence de bits à un vecteur de symboles de bande de base ;

l'application, par le second circuit de mappage (208), d'une matrice d'allocation au vecteur de symboles de bande de base pour générer un second vecteur de symboles, dans lequel la matrice d'allocation est une matrice de précodage basée sur la première séquence de bits ;

la concaténation, par un circuit de concaténation (210) du dispositif de transmission (202), le premier vecteur de symboles et le second vecteur de symboles en un vecteur de symboles en bande de base ;

la modulation, par un circuit de modulation (211) du dispositif de transmission (202), le vecteur de symboles en bande de base pour générer un vecteur de symboles modulés comprenant des symboles modulés ; et

la transmission, par au moins une antenne (212) du dispositif émetteur (202), chaque symbole modulé du vecteur de symboles modulés dans un signal radiofréquence à un dispositif récepteur (104).

**12.** Procédé (400) selon la revendication 11, dans lequel le codage, par le circuit de codage (204), comprend :

la division du message d'entrée en un premier message et un second message,

l'encodage du premier message dans la première séquence de bits, et

l'encodage du second message dans la seconde séquence de bits.

**13.** Procédé (1000) pour une communication à accès aléatoire, comprenant :

la réception, par au moins une antenne (502) d'un dispositif de réception (104), d'une pluralité de signaux radiofréquences simultanément provenant d'une pluralité de dispositifs de transmission (102) ;

la démodulation, par un circuit de démodulation (503) du dispositif de réception (104), les signaux de radiofréquence reçus en signaux démodulés ;

la division, par un circuit de division (504) du dispositif de réception (104), des signaux démodulés en signaux de première bande de base et signaux de seconde bande de base ;

la génération, par un circuit de séparation (506) d'un dispositif de réception (104), d'une pluralité de premiers vecteurs de symboles estimés à partir des premiers signaux de bande de base, chacun des premiers vecteurs de symboles estimés étant une structure tensorielle de rang 1 d'ordre d associée à chaque dispositif de transmission, où d > 1 ;

la génération, par le circuit de séparation (506), d'une pluralité de paramètres de canal estimés associés à la pluralité de dispositifs de transmission (102) sur la base des premiers signaux de bande de base, et générant, par un circuit de sélection de précodeur (704), une pluralité de matrices de précodage estimées associées à la pluralité de dispositifs de transmission (102), en utilisant la pluralité de premiers vecteurs de symboles estimés ;

la génération, par un circuit d'égalisation (508) du dispositif de réception (104), d'une pluralité de seconds vecteurs de symboles estimés à partir des seconds signaux de bande de base, sur la base de la pluralité de matrices de précodage estimées et de la pluralité de paramètres de canal estimés ;

le décodage, par un circuit de décodage (510) du dispositif de réception (104), chacun des premier et second vecteurs de symboles estimés pour générer une pluralité de messages décodés, chaque message décodé comprenant une première séquence de bits qui correspond à une première partie de données et une seconde séquence de bits qui correspond à une seconde partie de données associée à un dispositif de transmission correspondant parmi la pluralité de dispositifs de transmission (102).

14. Procédé (1000) selon la revendication 13, dans lequel le décodage, par le circuit de décodage (510), comprend :

le décodage, par chaque premier décodeur d'une pluralité de premiers décodeurs (516) du circuit de décodage (510), de l'un des premiers vecteurs de symboles estimés afin de générer une pluralité de premiers messages décodés, chaque premier message décodé comprenant une première séquence de bits correspondant à une première partie de données associée à un dispositif de transmission correspondant parmi la pluralité de dispositifs de transmission (102) ; et
le décodage, par chaque second décodeur d'une pluralité de seconds décodeurs (518) du circuit de décodage (510), l'un des seconds vecteurs de symboles estimés générés par le circuit d'égalisation (508) pour générer une pluralité de seconds messages décodés, chacun des seconds messages décodés comprenant une seconde séquence de bits qui correspond à une seconde partie de données associée à un dispositif de transmission correspondant parmi la pluralité de dispositifs de transmission (102).

15. Produit de programme informatique comprenant des instructions de programme pour la réalisation du procédé (400) selon l'une quelconque des revendications 11 à 12 et/ou le procédé (1000) selon l'une quelconque des revendications 13 à 14, lorsqu'il est exécuté par un ou plusieurs processeurs dans un système informatique.

EP 4 527 141 B1

Plurality of
Transmitting Devices
102

102A

102B

•
•
•

102K

Communication
Network
106

Receiving
Device
104

100

FIG. 1

200A

Transmitting Device 202

Encoding Circuit
204

First Mapping Circuit
206

Second Mapping Circuit
208

Concatenation Circuit
210

Modulation Circuit
211

Antenna
212

Processor
214

Memory
216

FIG. 2A

FIG. 2B

FIG. 2C

302

Time Domain

300

| | | | | |
|---|---|---|---|---|
| $v_k(1,1)$ | $v_k(2,1)$ | $\cdots$ | | |
| $v_k(1,2)$ | $v_k(2,2)$ | | | |
| $v_k(1,3)$ | $v_k(2,3)$ | | | $\cdots$ |
| $v_k(1,4)$ | $v_k(2,4)$ | | | $v_k(S,F)$ |

Frequency
Domain

304

FIG. 3

400

ACQUIRING, BY ENCODING CIRCUIT OF TRANSMITTING DEVICE, INPUT MESSAGE 402

↓

ENCODING, BY ENCODING CIRCUIT, INPUT MESSAGE INTO FIRST SEQUENCE OF BITS AND SECOND SEQUENCE OF BITS 404

↓

SPLITTING, BY ENCODING CIRCUIT, FIRST SEQUENCE OF BITS IN d BLOCKS OF BITS, WHERE d > 1 406

↓

DETERMINING, BY ENCODING CIRCUIT, d VECTORS BASED ON d BLOCKS OF BITS 408

↓

CONSTRUCTING FIRST SYMBOL VECTOR, BY FIRST MAPPING CIRCUIT OF TRANSMITTING DEVICE, BY COMPUTING KRONECKER PRODUCT OF d VECTORS TO GENERATE RANK-1 TENSOR STRUCTURE OF ORDER d 410

↓

MAPPING, BY SECOND MAPPING CIRCUIT OF TRANSMITTING DEVICE, SECOND SEQUENCE OF BITS TO VECTOR OF BASEBAND SYMBOLS 412

↓

APPLYING, BY SECOND MAPPING CIRCUIT, ALLOCATION MATRIX TO VECTOR OF BASEBAND SYMBOLS TO GENERATE SECOND SYMBOL VECTOR, WHERE ALLOCATION MATRIX IS PRECODING MATRIX BASED ON FIRST SEQUENCE OF BITS 414

↓

CONCATENATING, BY CONCATENATING CIRCUIT OF TRANSMTTING DEVICE, FIRST SYMBOL VECTOR AND SECOND SYMBOL VECTOR INTO BASEBAND SYMBOL VECTOR 416

↓

MODULATING, BY MODULATION CIRCUIT OF TRANSMITTING DEVICE, BASEBAND SYMBOL VECTOR TO GENERATE A MODULATED SYMBOL VECTOR COMPRSING MODULATED SYMBOLS 417

↓

TRANSMITTING, BY ANTENNA OF TRANSMITTING DEVICE, EACH MODULATED SYMBOL OF MODULATED SYMBOL VECTOR IN RADIO FREQUENCY SIGNAL TO RECEIVING DEVICE 418

FIG. 4

500

Receiving Device 104

Demodulation Circuit
503

Splitting Circuit
504

Antenna
502

Separation Circuit
506

Equalizing Circuit
508

Processor
512

Decoding Circuit
510

Plurality of First Decoders
516

Plurality of Second
Decoders
518

Memory
514

Plurality of Decoders
520

FIG. 5

104

600

$\widehat{m}_{1,1}$
$\widehat{m}_{2,1}$ $\Big\}$ $\widehat{m}_1$

506

$y_p$ →

$\widehat{h}_{k,}U_{\hat{\mu}1,K}$

$\widehat{h}_{1,}U_{\hat{\mu}1,1}$

$y_q$

508

$\widehat{m}_{1,k}$
$\widehat{m}_{2,k}$ $\Big\}$ $\widehat{m}_k$

$\widehat{m}_{1,\hat{K}}$
$\widehat{m}_{2,\hat{K}}$ $\Big\}$ $\widehat{m}_{\hat{K}}$

## FIG. 6

700

Received
signal y →

506

User 1
estimated symbols
$(\hat{x}_{1,1}, \dots, \hat{x}_{d,1})$

User K
estimated symbols
$(\hat{x}_{1,K}, \dots, \hat{x}_{d,K})$

516

Single user
decoder 1

...

Single user
decoder K

Estimated bits
$\widehat{m}_1 = (\widehat{b}_{1,1}, \dots, \widehat{b}_{B,1})$

Estimated bits
$\widehat{m}_K = (\widehat{b}_{1,K}, \dots, \widehat{b}_{B,K})$

702
...

Binary
encoder

Binary
encoder

$\hat{\mu}_{1,1}$

$\hat{\mu}_{1,K}$

704
...

Precoder
selection

Precoder
selection

$U_{\hat{u}1,1}$

$U_{\hat{u}1,K}$

$\widehat{h}_1$ ... $\widehat{h}_k$

$\widehat{h}_1, U_{\hat{u}1,1}$

$\widehat{h}_1, U_{\hat{u}1,K}$

## FIG. 7

FIG. 8

FIG. 9

1000

RECEIVING, BY ANTENNA OF RECEIVING DEVICE, PLURALITY OF RADIO
FREQUENCY SIGNALS CONCURRENTLY FROM PLURALITY OF
TRANSMITTING DEVICES
1002

DEMODULATING, BY DEMODULATING CIRCUIT OF RECEIVING DEVICE,
RECEIVED RADIO FREQUENCY SIGNALS INTO DEMODULATED SIGNALS
1003

SPLITTING, BY SPLITTING CIRCUIT, DEMODULATED SIGNALS INTO FIRST
BASEBAND SIGNALS AND SECOND BASEBAND SIGNALS 1004

GENERATING, BY SEPARATION CIRCUIT, PLURALITY OF FIRST ESTIMATED
SYMBOL VECTORS FROM FIRST BASEBAND SIGNALS, USING A RANK-1
TENSOR STRUCTURE OF ORDER d ASSOCIATED WITH EACH
TRANSMITTING DEVICE, WHERE d > 1
1006

GENERATING, BY SEPARATION CIRCUIT, PLURALITY OF ESTIMATED
CHANNEL PARAMETERS ASSOCIATED WITH PLURALITY OF TRANSMITTING
DEVICES AND PLURALITY OF ESTIMATED PRECODING MATRICES
ASSOCIATED WITH PLURALITY OF TRANSMITTING DEVICES, BASED ON
FIRST BASEBAND SIGNALS
1010

A

FIG. 10A

1000

A

GENERATING, BY EQUALIZING CIRCUIT, PLURALITY OF SECOND ESTIMATED SYMBOL VECTORS FROM THE SECOND BASEBAND SIGNALS, BASED ON PLURALITY OF ESTIMATED PRECODING MATRICES AND PLURALITY OF ESTIMATED CHANNEL PARAMETER 1012

DECODING, BY DECODING CIRCUIT, EACH OF FIRST AND SECOND ESTIMATED SYMBOL VECTORS TO GENERATE PLURALITY OF DECODED MESSAGES, EACH DECODED MESSAGE COMPRISING FIRST SEQUENCE OF BITS THAT CORRESPONDS TO FIRST PART OF DATA AND A SECOND SEQUENCE OF BITS THAT CORRESPONDS TO A SECOND PART OF DATA ASSOCIATED WITH CORRESPONDING TRANSMITTING DEVICE AMONGST PLURALITY OF TRANSMITTING DEVICES 1016

FIG. 10B

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021175430 A1